(19) Europäisches Patentamt / European Patent Office / Office européen des brevets

(11) **EP 4 152 799 A1**

(12) **EUROPEAN PATENT APPLICATION**
published in accordance with Art. 153(4) EPC

(43) Date of publication:
**22.03.2023 Bulletin 2023/12**

(21) Application number: **21816662.7**

(22) Date of filing: **11.05.2021**

(51) International Patent Classification (IPC):
*H04W 24/08* [(2009.01)]

(52) Cooperative Patent Classification (CPC):
**H04B 7/0426; H04B 17/309; H04W 24/08; H04W 24/10**

(86) International application number:
**PCT/CN2021/093164**

(87) International publication number:
**WO 2021/244239 (09.12.2021 Gazette 2021/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.05.2020 CN 202010480975**

(71) Applicant: **Huawei Technologies Co., Ltd.**
**Longgang District,**
**Shenzhen,**
**Guangdong 518129 (CN)**

(72) Inventors:
• **GUO, Yuchen**
 **Shenzhen, Guangdong 518129 (CN)**

• **SHILO, Shimon**
 **Shenzhen, Guangdong 518129 (CN)**
• **LI, Yunbo**
 **Shenzhen, Guangdong 518129 (CN)**
• **YU, Jian**
 **Shenzhen, Guangdong 518129 (CN)**
• **GAN, Ming**
 **Shenzhen, Guangdong 518129 (CN)**
• **EZRI, Doron**
 **Shenzhen, Guangdong 518129 (CN)**
• **MELZER, Ezer**
 **Shenzhen, Guangdong 518129 (CN)**
• **TSODIK, Genadiy**
 **Shenzhen, Guangdong 518129 (CN)**

(74) Representative: **Maiwald GmbH**
**Engineering**
**Elisenhof**
**Elisenstrasse 3**
**80335 München (DE)**

(54) **CHANNEL SOUNDING METHOD AND DEVICE FOR MULTI-AP COORDINATED TRANSMISSION**

(57)  This application relates to the field of wireless communication, and in particular, to a channel sounding method for multi-AP coordinated transmission and a related apparatus. For example, the application is applied to a wireless local area network supporting the 802.1 1be standard. The method includes: A first AP/primary AP generates and send an announcement frame that carries first indication information, to indicate a type of downlink multi-AP coordinated transmission; a plurality of APs (which may or may not include the first AP) participating in multi-AP coordinated transmission sends NDP frames; and the STA performs channel measurement on the received NDP frame according to the indicated type of downlink multi-AP coordinated transmission, generates a beamforming report corresponding to the type of downlink multi-AP coordinated transmission, and feeds back the beamforming report to the first AP, to support different types of multi-AP coordinated transmission, reduce inter-cell interference, and improve user service quality.

FIG. 4A

**(Cont. next page)**

CONT.
FROM
FIG. 4A

CONT.
FROM
FIG. 4A

CONT.
FROM
FIG. 4A

CONT.
FROM
FIG. 4A

S405: Perform channel measurement on the NDP frame according to the type of downlink multi-AP coordinated transmission indicated by the first indication information, to generate a beamforming report corresponding to the type of downlink multi-AP coordinated transmission indicated by the first indication information

S407: Send a trigger frame

S406: Send the beamforming report

Send the beamforming report

Send the beamforming report

FIG. 4B

**Description**

This application claims priority to Chinese Patent Application No. 202010480975.4, filed with the China National Intellectual Property Administration on May 30, 2020 and entitled "CHANNEL SOUNDING METHOD FOR MULTI-AP COORDINATED TRANSMISSION AND RELATED APPARATUS", which is incorporated herein by reference in its entirety.

**TECHNICAL FIELD**

This application relates to the field of wireless communication technologies, and in particular, to a channel sounding method for multi-AP coordinated transmission and a related apparatus.

**BACKGROUND**

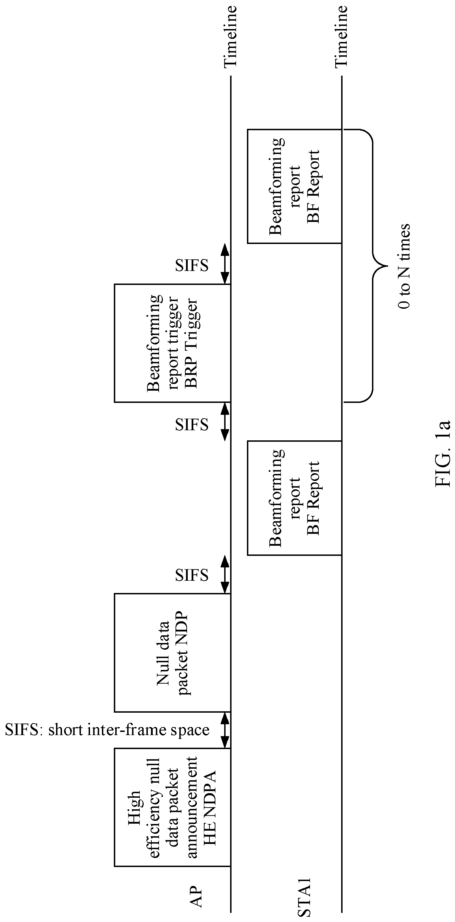

Before a wireless access point (access point, AP) transmits data, a channel sounding (Sounding) procedure needs to be performed, to obtain channel state information (channel state information, CSI) of a station (station, STA). The CSI may enable a communication system to adapt to a current channel condition, to provide assurance for high-reliability and high-rate communication in a multi-antenna system. In the Institute of Electrical and Electronics Engineers (IEEE, Institute of Electrical and Electronics Engineers) 802.11ax standard, a channel sounding procedure with single-AP and single-user feedback is shown in FIG. 1a. FIG. 1a is a schematic diagram of channel sounding with single-user/STA feedback in the 802.11ax standard. As shown in FIG. 1a, an AP first sends a high efficiency (high efficient, HE) null data packet announcement (null data packet announcement, NDPA) frame to notify a STA1 of a related channel sounding parameter, and then sends a null data packet (null data packet, NDP) frame after a short inter-frame space (short inter-frame space, SIFS). The NDP herein refers to a data packet that has no data field part and does not carry a media access control (media access control, MAC) frame. The STA1 may perform channel estimation by using the NDP frame, and then feed back CSI by using a beamforming report (beamforming report, BFR). Optionally, if the STA1 cannot feed back all of the beamforming report to the AP at a time, the STA1 needs to divide the entire beamforming report into a maximum of eight segments (Segment), and the STA1 feeds back to the AP each time that how many segments are not fed back. Therefore, the AP may further request, from the STA1 by sending a beamforming report trigger (BFR trigger) frame, a beamforming report segment that has not been fed back completely.

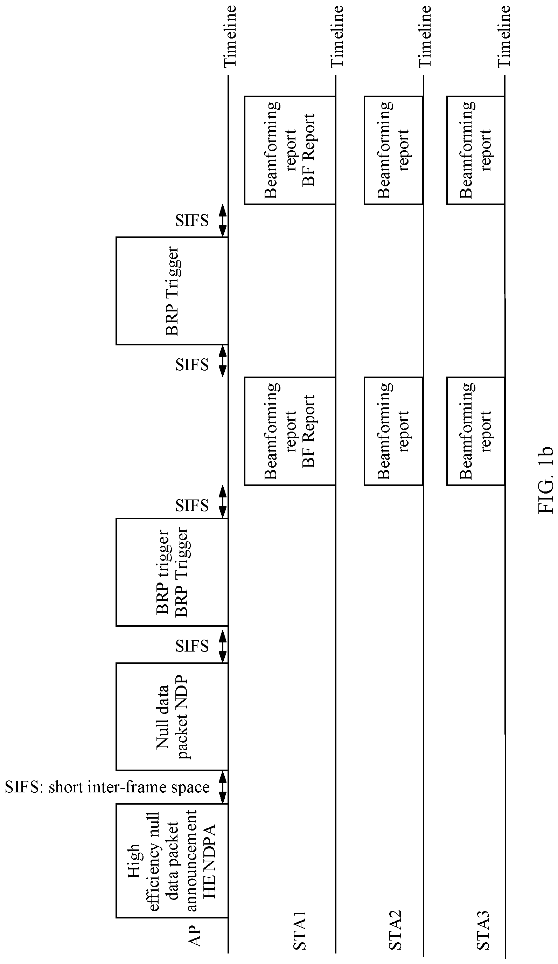

To improve channel sounding efficiency, a multi-user uplink transmission mechanism is introduced in a channel sounding procedure in the 802. 11ax standard. Refer to FIG. 1b for details. FIG. 1b is a schematic diagram of channel sounding with multi-user/STA feedback in the 802.11ax standard. As shown in FIG. 1b, different from the channel sounding procedure with single-user feedback, an AP first sends an NDPA frame to notify STAs (for example, a STA1, a STA2, and a STA3 in FIG. 1b) that need to perform channel sounding and related channel sounding parameters, and then sends an NDP frame at an interval of one SIFS; and then the AP sends a beamforming report trigger (BFR trigger) frame at an interval of one SIFS, to trigger the STAs that need to perform channel sounding to feed back beamforming reports. At another interval of one SIFS, the STAs that need to perform channel sounding separately feed back the beamforming reports to the AP.

However, with development of wireless networks and popularization of wireless local area network (wireless local area network, WLAN) technologies, WLAN devices become increasingly dense. Because wireless access points (AP) are easy to deploy, increasingly dense APs bring more inter-cell interference. A next-generation Wi-Fi (wireless fidelity, wireless fidelity) technology, such as a next-generation standard IEEE 802.11be (also referred to as WiFi 7 or Wi-Fi 7, or referred to as an extremely high throughput (Extremely High Throughput, EHT) protocol), considers coordination between APs, to reduce inter-cell interference and improve quality of service for a user. AP coordination means that a plurality of APs exchange information to achieve parallel transmission, avoid interference, or optimize transmission resource configuration. Before transmitting data, an AP needs to perform a channel sounding procedure. Therefore, to implement coordinated data transmission by the plurality of APs, a problem of channel sounding in a scenario of multi-AP coordinated transmission needs to be resolved first. Therefore, how to implement channel sounding in a scenario of multi-AP coordinated transmission to support the multiple APs in coordinated data transmission, reduce inter-cell interference, and improve quality of service for a user becomes an urgent problem to be resolved.

**SUMMARY**

Embodiments of this application provide a channel sounding method for multi-AP coordinated transmission and a related apparatus, to implement unified channel sounding in a scenario of multi-AP coordinated transmission, to support different types of multi-AP coordinated transmission, reduce inter-cell interference, and improve user service quality.

According to a first aspect, an embodiment of this application provides a channel sounding method for multi-AP coordinated transmission, applied to a station. The channel sounding method for multi-AP coordinated transmission includes: A station receives an announcement frame from a first access point, where the announcement frame may carry first indication information, to indicate a type of downlink multi-AP coordinated transmission; the station receives NDP frames from a plurality of access points, and may perform channel measurement on the received NDP frame according to the type of downlink multi-AP coordinated transmission, to generate a beamforming report corresponding to the type of downlink multi-AP coordinated transmission; and the station sends the generated beamforming report to the first access point and/or a second access point. The second access point is an access point participating in multi-AP coordinated transmission.

Optionally, the announcement frame may be an extremely high throughput NDPA frame.

Optionally, before the station feeds back the generated beamforming report to the first access point and/or the second access point, the station may receive a trigger frame from the first access point, to trigger the station to feed back the beamforming report.

In this solution, the first indication information is carried in the announcement frame, to indicate the type of downlink multi-AP coordinated transmission, so that after receiving the announcement frame, the STA performs channel measurement on the received NDP frame according to the type of downlink multi-AP coordinated transmission indicated by the first indication information, to generate the beamforming report corresponding to the type of downlink multi-AP coordinated transmission, and feeds back the beamforming report. In this solution, corresponding beamforming reports may be generated for different types of downlink multi-AP coordinated transmission, to implement channel sounding of different downlink multi-AP coordinated transmission, to support a corresponding type of multi-AP coordinated transmission, reduce inter-cell interference, and improve user service quality.

According to a second aspect, an embodiment of this application provides a channel sounding method for multi-AP coordinated transmission, used in a first access point, where the first access point may be a primary AP in multi-AP coordination. The channel sounding method for multi-AP coordinated transmission includes: A first access point generates and sends an announcement frame, where the announcement frame may carry first indication information, to indicate a type of downlink multi-AP coordinated transmission; and the first access point receives a beamforming report that is fed back by a station and that corresponds to the type of downlink multi-AP coordinated transmission.

Optionally, before the first access point receives the beamforming report that is fed back by the station and that corresponds to the type of downlink multi-AP coordinated transmission, the first access point may send a trigger frame to the station, to trigger the station to feed back the beamforming report.

Optionally, if the first access point needs to participate in subsequent multi-AP coordinated transmission, the first access point may send an NDP frame after sending the announcement frame.

According to a third aspect, an embodiment of this application provides a channel sounding method for multi-AP coordinated transmission, used in a second access point, where the second access point may be a secondary AP in multi-AP coordinated transmission. The channel sounding method for multi-AP coordinated transmission includes: A second access point receives an announcement frame from a first access point, where the announcement frame may carry first indication information and second indication information; and the second access point generates an NDP frame, and sends the NDP frame to a station according to a manner, indicated by the second indication information, of sending an NDP frame by an access point participating in multi-AP coordinated transmission. The NDP frame is for channel measurement to generate a beamforming report corresponding to a type of downlink multi-AP coordinated transmission indicated by the first indication information, and the beamforming report is for feeding back channel state information of the station.

Optionally, the second access point may receive the beamforming report that is fed back by the station and that corresponds to the type of downlink multi-AP coordinated transmission, and participate in a corresponding type of multi-AP coordinated transmission based on the beamforming report, improving user service quality.

With reference to the third aspect, in a possible design, that the second access point sends the NDP frame to the station according to the manner, indicated by the second indication information, of sending an NDP frame by an access point participating in multi-AP coordinated transmission specifically includes: The second access point sends the NDP frame to the station at a time interval after the announcement frame is received if the manner, indicated by the second indication information, of sending an NDP frame by an access point participating in multi-AP coordinated transmission is a manner of simultaneous sending; or the second access point sends the NDP frame to the station at sending time of the NDP frame indicated by the announcement frame if the manner, indicated by the second indication information, of sending an NDP frame by an access point participating in multi-AP coordinated transmission is a manner of sequential sending.

In this solution, the second indication information is carried in the announcement frame, and the plurality of access points participating in multi-AP coordinated transmission send the NDP frames in the manner of simultaneous sending or the manner of sequential sending indicated by the second indication information. The station may also estimate sending time of the NDP frame according to the manner of sending indicated by the second indication information, so that the station can estimate time at which the NDP frame is received. This helps the station receive the NDP frame.

According to a fourth aspect, an embodiment of this application provides a communication apparatus. The communication apparatus may be a station or a chip in the station, for example, a Wi-Fi chip, and includes: a transceiver unit, configured to: receive an announcement frame from a first access point, where the announcement frame may carry first indication information, to indicate a type of downlink multi-AP coordinated transmission; and receive NDP frames from a plurality of access points; and a processing unit, configured to perform channel measurement on the received NDP frame according to the type of downlink multi-AP coordinated transmission. The processing unit is further configured to generate a beamforming report corresponding to the type of downlink multi-AP coordinated transmission. The transceiver unit is further configured to feed back the beamforming report to the first access point and/or a second access point. The second access point is an access point participating in multi-AP coordinated transmission.

Optionally, the announcement frame may be an extremely high throughput NDPA frame.

Optionally, the transceiver unit is further configured to receive a trigger frame from the first access point, to trigger the station to feed back the beamforming report.

According to a fifth aspect, an embodiment of this application provides a communication apparatus. The communication apparatus may be a first access point or a chip in the first access point, for example, a Wi-Fi chip, and includes: a processing unit, configured to generate an announcement frame; and a transceiver unit, configured to send the announcement frame, where the announcement frame may carry first indication information, to indicate a type of downlink multi-AP coordinated transmission. The transceiver unit is further configured to receive a beamforming report that is fed back by a station and that corresponds to the type of downlink multi-AP coordinated transmission. The beamforming report is used to feed back channel state information of the station.

Optionally, the transceiver unit is further configured to send a trigger frame to the station, to trigger the station to feed back the beamforming report.

Optionally, the transceiver unit is further configured to send an NDP frame after sending the announcement frame.

According to a sixth aspect, an embodiment of this application provides a communication apparatus. The communication apparatus may be a second access point or a chip in the second access point, for example, a Wi-Fi chip, and includes: a transceiver unit, configured to receive an announcement frame from a first access point, where the announcement frame may carry first indication information and second indication information; and a processing unit, configured to generate an NDP frame. The transceiver unit is further configured to send the NDP frame to a station according to a manner, indicated by the second indication information, of sending an NDP frame by an access point participating in multi-AP coordinated transmission. The NDP frame is for channel measurement to generate a beamforming report corresponding to the type of downlink multi-AP coordinated transmission indicated by the first indication information.

Optionally, the transceiver unit is further configured to receive the beamforming report that is fed back by the station and that corresponds to the type of downlink multi-AP coordinated transmission.

With reference to the sixth aspect, in a possible design, the transceiver unit is specifically configured to: send the NDP frame to the station at a time interval after the announcement frame is received when the manner, indicated by the second indication information, of sending an NDP frame by an access point participating in multi-AP coordinated transmission is a manner of simultaneous sending; or send the NDP frame to the station at sending time of the NDP frame indicated by the announcement frame when the manner, indicated by the second indication information, of sending an NDP frame by an access point participating in multi-AP coordinated transmission is a manner of sequential sending.

In an implementation of any one of the foregoing aspects, if the type of downlink multi-AP coordinated transmission indicated by the first indication information is joint transmission, the beamforming report may be used to feed back channel state information of a combined channel between a plurality of access points and the station.

In an implementation of any one of the foregoing aspects, if the type of downlink multi-AP coordinated transmission indicated by the first indication information is coordinated beamforming transmission, the beamforming report may be used to feed back a plurality of pieces of channel state information of a plurality of channels between the plurality of access points and the station, where one channel exists between one access point and the station, and one channel is corresponding to one piece of channel state information.

One piece of channel state information includes an average signal-to-noise ratio of each space-time stream of a channel on a plurality of subcarriers, and angle values corresponding to a compressed beamforming feedback matrix of the channel corresponding to the plurality of subcarriers.

In this solution, when the first indication information indicates joint transmission, the station feeds back channel state information of a combined channel. When the first indication information indicates coordinated beamforming transmission, the station feeds back channel state information of a channel between each access point and the station. The station may feed back different channel state information according to different types of downlink multi-AP coordinated transmission. APs participating in coordination perform multi-AP coordinated transmission by using beamforming reports corresponding to different coordination transmission types, to meet requirements of different types of multi-AP coordinated transmission scenarios.

In an implementation of any one of the foregoing aspects, the first indication information may be carried in a common information field or a user information field of the announcement frame.

Optionally, the announcement frame may carry second indication information, to indicate a manner of sending an NDP frame by an access point participating in multi-AP coordinated transmission. The second indication information may also be carried in the common information field or the user information field of the announcement frame.

Optionally, the manner of sending an NDP frame by an access point participating in multi-AP coordinated transmission may include a manner of simultaneous sending and a manner of sequential sending. The manner of simultaneous sending is a manner of sending an NDP frame by an access point participating in multi-AP coordinated transmission at a time interval after the announcement frame is received, and the manner of sequential sending is a manner of sending an NDP frame according to sending time of the NDP frame indicated by the announcement frame.

According to a seventh aspect, an embodiment of this application provides a communication apparatus, which is specifically a station or a chip or a processing system in the station, and includes a processor and a transceiver. The processor is configured to support the station in performing a corresponding function in the foregoing method, for example, performing channel measurement on a received NDP frame according to a type of downlink multi-AP coordinated transmission indicated by first indication information, to generate a beamforming report corresponding to the type of downlink multi-AP coordinated transmission indicated by the first indication information. The transceiver is configured to support communication between the station and a first access point and/or a second access point, for example, receiving an announcement frame sent by the first access point, receiving NDP frames sent by a plurality of access points, and/or sending a frame, a data packet, or an instruction in the foregoing method to the first access point. The station may further include a memory. The memory is configured to be coupled to the processor and store program instructions and data that are necessary for the station.

According to an eighth aspect, an embodiment of this application provides a communication apparatus, which is specifically a first access point/primary AP or a chip or a processing system in the first access point, and includes a processor and a transceiver. The processor is configured to support the first access point in performing a corresponding function in the foregoing method, for example, generating an announcement frame. The transceiver is configured to support communication between the first access point and a station and/or a second access point, for example, sending an announcement frame and/or an NDP frame, and receiving a beamforming report. The first access point may further include a memory. The memory is configured to be coupled to the processor and store program instructions and data that are necessary for the first access point.

According to a ninth aspect, an embodiment of this application provides a communication apparatus, which is specifically a second access point/secondary AP or a chip or a processing system in the second access point, and includes a processor and a transceiver. The processor is configured to support the second access point in performing a corresponding function in the foregoing method, for example, generating an NDP frame. The transceiver is configured to support communication between the second access point and a station and/or a first access point, for example, receiving an announcement frame sent by the first access point, and sending an NDP frame to the station. The second access point may further include a memory. The memory is configured to be coupled to the processor and store program instructions and data that are necessary for the second access point.

According to a tenth aspect, an embodiment of this application provides a wireless communication system. The system includes the station according to the seventh aspect, the first access point according to the eighth aspect, and the second access point according to the ninth aspect.

According to an eleventh aspect, an embodiment of this application provides a chip or a chip system, including an input/output interface and a processing circuit. The input/output interface is configured to exchange information or data, and the processing circuit is configured to execute instructions, to enable an apparatus on which the chip or the chip system is installed to perform the channel sounding method for multi-AP coordinated transmission according to any one of the foregoing aspects.

According to a twelfth aspect, this application provides a computer-readable storage medium. The computer-readable storage medium stores instructions, and the instructions may be executed by one or more processors on a processing circuit. When the instructions are executed on a computer, the computer is enabled to perform the channel sounding method for multi-AP coordinated transmission according to any one of the foregoing aspects. Optionally, the computer-readable storage medium may be a non-volatile readable storage medium.

According to a thirteenth aspect, this application provides a computer program product including instructions. When the computer program product runs on a computer, the computer is enabled to perform the channel sounding method for multi-AP coordinated transmission according to any one of the foregoing aspects.

According to a fourteenth aspect, this application provides a chip system. The chip system includes a processor, configured to support an apparatus on which the chip system is installed in implementing the channel sounding method for multi-AP coordinated transmission according to any one of the foregoing aspects, for example, generating or processing a frame and/or information in the channel sounding method for multi-AP coordinated transmission. In a possible design, the chip system further includes a memory. The memory is configured to store program instructions and data that are necessary for a data sending device. The chip system may include a chip, or may include a chip and another discrete component.

Unified channel sounding can be implemented in a scenario of multi-AP coordinated transmission by implementing embodiments of this application, to support different types of multi-AP coordinated transmission, reduce inter-cell interference, and improve user service quality.

## BRIEF DESCRIPTION OF DRAWINGS

FIG. 1a is a schematic diagram of channel sounding with single-user/STA feedback in the 802.11ax standard;
FIG. 1b is a schematic diagram of channel sounding with multi-user/STA feedback in the 802.11ax standard;
FIG. 2 is a schematic diagram depicting an architecture of a wireless communication system according to an embodiment of this application;
FIG. 3a is a schematic diagram of a joint transmission communication scenario according to an embodiment of this application;
FIG. 3b is a schematic diagram of a coordinated beamforming communication scenario according to an embodiment of this application;
FIG. 3c is a schematic diagram of a channel matrix between multiple APs and multiple STAs according to an embodiment of this application;
FIG. 4A and FIG. 4B are a schematic flowchart of a channel sounding method for multi-AP coordinated transmission according to an embodiment of this application;
FIG. 5a is a schematic diagram depicting a partial frame structure of an EHT NDPA frame according to an embodiment of this application;
FIG. 5b is another schematic diagram depicting a partial frame structure of an EHT NDPA frame according to an embodiment of this application;
FIG. 6 is a schematic diagram of a channel matrix between multiple APs and a single STA according to an embodiment of this application;
FIG. 7 is a schematic diagram depicting a structure of an EHT MIMO control field according to an embodiment of this application;
FIG. 8 is a schematic diagram depicting a partial frame structure of a BFRP trigger frame according to an embodiment of this application;
FIG. 9 is a schematic diagram of a time sequence of a channel sounding method for multi-AP coordinated transmission according to an embodiment of this application;
FIG. 10 is a schematic diagram of another time sequence of a channel sounding method for multi-AP coordinated transmission according to an embodiment of this application;
FIG. 11 is a schematic diagram depicting a structure of a communication apparatus according to an embodiment of this application; and
FIG. 12 is a schematic diagram depicting another structure of a communication apparatus according to an embodiment of this application.

## DESCRIPTION OF EMBODIMENTS

The following clearly and completely describes the technical solutions in embodiments of this application with reference to the accompanying drawings in embodiments of this application.

To better understand the channel sounding method for multi-AP coordinated transmission provided in embodiments of this application, the following describes system architectures and/or application scenarios of the channel sounding method for multi-AP coordinated transmission provided in embodiments of this application. It may be understood that scenarios described in embodiments of this application are intended to describe the technical solutions in embodiments of this application more clearly, and do not constitute a limitation on the technical solutions provided in embodiments of this application.

Embodiments of this application provide a channel sounding method for multi-AP coordinated transmission, to implement unified channel sounding in a scenario of multi-AP coordinated transmission, to support different types of multi-AP coordinated transmission, reduce inter-cell interference, and improve user service quality. The channel sounding method for multi-AP coordinated transmission may be applied to a wireless communication system, for example, a wireless local area network system. The channel sounding method for multi-AP coordinated transmission may be implemented by a communication device in the wireless communication system or a chip or a processor in the communication device.

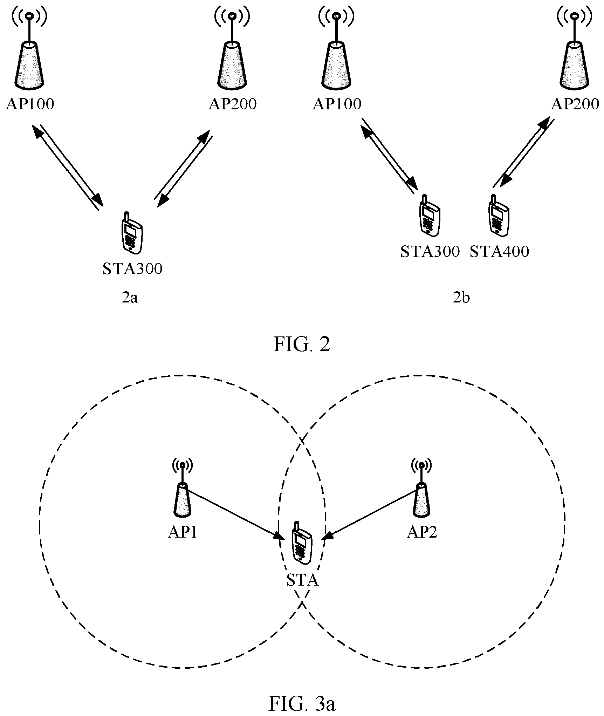

Refer to FIG. 2. FIG. 2 is a schematic diagram depicting an architecture of a wireless communication system according to an embodiment of this application. As shown in 2a or 2b of FIG. 2, the wireless communication system may include at least two access points (for example, an AP100 and an AP200) and at least one station (for example, a STA300 and a STA400). The access point and the station support a WLAN communication protocol. The communication protocol may include IEEE 802.1 1be (or referred to as Wi-Fi 7, an EHT protocol), and may further include protocols such as IEEE 802.11ax and IEEE 802.11ac. Certainly, the communication protocol may further include a next-generation protocol of IEEE 802.1 1be and the like with continuous evolution and development of communication technologies. A WLAN is used as an example. The apparatus for implementing the method in this application may be an access point or a station in the WLAN, or a chip or a processing system installed in the access point or the station.

An access point (for example, the AP100 and the AP200) is an apparatus having a wireless communication function, supports communication by using a WLAN protocol, has a function of communicating with another device (for example, a station or another access point) in a WLAN network, and certainly, may further have a function of communicating with another device. In a WLAN system, an access point may be referred to as an access point station (AP STA). The apparatus having the wireless communication function may be an entire device, or may be a chip or a processing system installed in the entire device. The device in which the chip or the processing system is installed may implement the method and the function in embodiments of this application under control of the chip or the processing system. The AP in embodiments of this application is an apparatus providing a service for a STA, and may support 802.11 series protocols. For example, the AP may be a communication entity, for example, a communication server, a router, a switch, or a bridge. The AP may include a macro base station, a micro base station, a relay station, and the like in various forms. Certainly, the AP may alternatively be a chip or a processing system in these devices in various forms, to implement the method and function in embodiments of this application.

A station (for example, the STA300 or STA400) is an apparatus having a wireless communication function, supports communication by using a WLAN protocol, and has a capability of communicating with another station or access point in a WLAN network. In the WLAN system, a station may be referred to as a non-access point station (non-access point station, non-AP STA). For example, the STA is any user communication device that allows a user to communicate with an AP and further communicate with a WLAN. The apparatus may be an entire device, or may be a chip or a processing system installed in the entire device. The device in which the chip or the processing system is installed may implement the method and the function in embodiments of this application under control of the chip or the processing system. For example, the STA may be a user device that can connect to the internet, for example, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), or a mobile phone. Alternatively, the STA may be an internet of things node in the internet of things, an in-vehicle communication apparatus in the internet of vehicles, an entertainment device, a game device or system, a global positioning system device, or the like. The STA may alternatively be a chip or a processing system in the foregoing terminals.

The WLAN system can provide high-speed and low-latency transmission. With continuous evolution of WLAN application scenarios, the WLAN system is to be applied to more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops and warehousing. Certainly, a device (such as an access point or a station) that supports WLAN communication may be a sensor node (for example, a smart water meter, a smart electricity meter, or a smart air detection node) in smart city, a smart device (for example, a smart camera, a projector, a display, a television, a stereo, a refrigerator, or a washing machine) in smart home, a node in the internet of things, an entertainment terminal (for example, an AR, a VR, or another wearable device), a smart device (for example, a printer, a projector, a loudspeaker, or a stereo) in smart office, an internet of vehicle device in the internet of vehicle, an infrastructure (for example, a vending machine, a self-service navigation station of a supermarket, a self-service cash register device, or a self-service ordering machine) in daily life scenarios, a device in a large sports or music venue, and the like. Specific forms of the STA and the AP are not specifically limited in embodiments of this application, and are merely examples for description herein.

The foregoing content briefly describes system architectures and/or application scenarios of the channel sounding method for multi-AP coordinated transmission provided in embodiments of this application. For ease of understanding the technical solutions in embodiments of this application, the following briefly describes two implementations of multi-AP coordinated transmission in embodiments of this application.

1. Joint transmission (joint transmission, JT)

Joint transmission (JT) means that a plurality of APs transmit same data to one STA concurrently (or simultaneously), to improve a received signal-to-noise ratio of the STA. Refer to FIG. 3a. FIG. 3a is a schematic diagram of a joint transmission communication scenario according to an embodiment of this application. For example, two APs jointly perform transmission to one STA. As shown in FIG. 3a, an AP1 and an AP2 may transmit same data to the STA concurrently (or simultaneously). Optionally, joint transmission may be applicable to a STA at a cell edge. When a signal from an AP (for example, the AP1) to the STA at the cell edge is weak, data may be first transmitted to another AP (for example, the AP2) that is closer to the STA, and then the AP2 and the AP 1 initiate joint transmission, improving quality of service for the STA at the cell edge.

It may be understood that joint transmission of a plurality of APs is not limited to a scenario in which a plurality of APs communicate with one STA, and may also be applied to a scenario in which a plurality of APs communicate with a plurality of STAs, that is, the plurality of APs are combined to form a large antenna array to perform multi-user multiple-input multiple-output (multi-user multiple input multiple output, MU-MIMO) transmission with the plurality of STAs. When a plurality of APs are combined to perform MU-MIMO transmission with a plurality of STAs, the plurality of APs need to obtain channel state information (CSI) of each STA in advance, to perform precoding (precoding) when sending data to the plurality of STAs, reducing interference between the plurality of STAs.

It may be understood that "a plurality of" mentioned in this application may mean two or more, or greater than or equal to two. It may be further understood that "multiple APs" mentioned in this application is short for "a plurality of APs", and "multiple STAs" is short for "a plurality of STAs".

2. Coordinated beamforming (coordinated beamforming, co-BF, CBF for short)

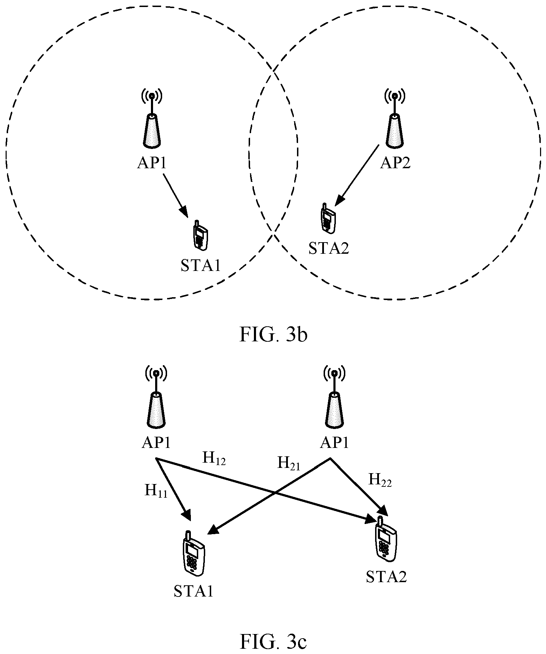

Coordinated beamforming (CBF) means that a plurality of APs separately transmit data to respective STAs. Before the plurality of APs transmit data, states of downlink channels from the plurality of APs to the plurality of STAs need to be measured, to obtain CSI, and then coordinated beamforming is performed according to the CSI, so that a beam is directed to a destination STA of the AP, and a direction to another STA is avoided, reducing interference to another STA. Refer to FIG. 3b for details. FIG. 3b is a schematic diagram of a coordinated beamforming communication scenario according to an embodiment of this application. Two APs and two STAs are used as an example. As shown in FIG. 3b, an AP1 transmits data to a STA1, and an AP2 transmits data to a STA2. Before the AP1 transmits data to the STA1, a state of a downlink channel from the AP1 to the STA1 and a state of a downlink channel from the AP1 to the STA2 need to be measured, to obtain CSI. The AP1 performs coordinated beamforming according to the CSI, so that a beam is directed to the STA1 and a direction to the STA2 is avoided. Similarly, before the AP2 transmits data to the STA2, a state of a downlink channel from the AP2 to the STA1 and a state of a downlink channel from the AP2 to the STA2 need to be measured, to obtain CSI. The AP2 performs coordinated beamforming according to the CSI, so that a beam is directed to the STA2 and a direction to the STA1 is avoided at the same time.

Therefore, in a co-BF scenario, parallel transmission of a plurality of APs can be implemented, and interference to another STA can be reduced, improving an overall throughput of a network.

In conclusion, regardless of multi-AP joint transmission or multi-AP coordinated beamforming, an AP needs to obtain channel state information of a STA before transmitting data. A difference lies in that CSI obtained by a STA through measurement in a joint transmission communication scenario is different from that in a coordinated beamforming communication scenario. Refer to FIG. 3c. FIG. 3c is a schematic diagram of a channel matrix between multiple APs and multiple STAs according to an embodiment of this application. As shown in FIG. 3c, a channel matrix between an AP1 and a STA1 is $H_{11}$, a channel matrix between the AP1 and a STA2 is $H_{12}$, a channel matrix between an AP2 and the STA1 is $H_{21}$, and a channel matrix between the AP2 and the STA2 is $H_{22}$. For joint transmission, after obtaining CSI returned by each STA, the plurality of APs need to use all the CSI, that is, need to jointly perform precoding (or referred to as global precoding) based on a large channel matrix synthesized by four small channel matrices: $H_{11}$, $H_{12}$, $H_{21}$, and $H_{22}$. For coordinated beamforming, after obtaining CSI, each AP may directly perform precoding (local precoding) based on two small channel matrices (for example, communication between the AP1 and the STA1 only needs to be based on $H_{11}$ and $H_{12}$).

The "large channel matrix" mentioned in this application may also be named as a joint channel matrix, a combined channel matrix, or the like. The "small channel matrix" may be named as a single channel matrix or the like.

It may be understood that "data transmission" and "transmitting data" mentioned in this application generally refer to communication. "Data" generally refers to communication information, which is not limited to data information, and may also be signaling information or the like.

Because CSI required by the AP in the joint transmission scenario is different from that in the coordinated beamforming scenario, channel sounding corresponding to the joint transmission scenario is also different from that corresponding to the coordinated beamforming scenario. Therefore, embodiments of this application provide a channel sounding method for multi-AP coordinated transmission, to implement unified channel sounding in a scenario of multi-AP coordinated transmission, to support multi-AP coordinated transmission of different types, reduce inter-cell interference, and improve user service quality.

The following further describes embodiments of this application with reference to more accompanying drawings. The aspects described herein may be used as a part of an IEEE 802.11 protocol.

It may be understood that a first access point in embodiments of this application may be a primary AP, and a second access point may be a secondary AP.

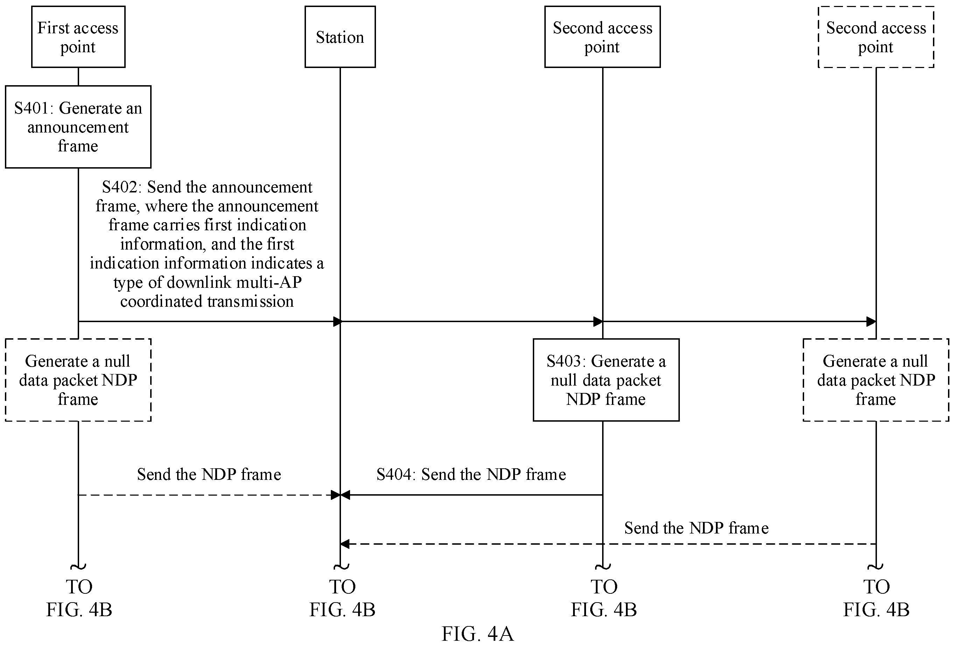

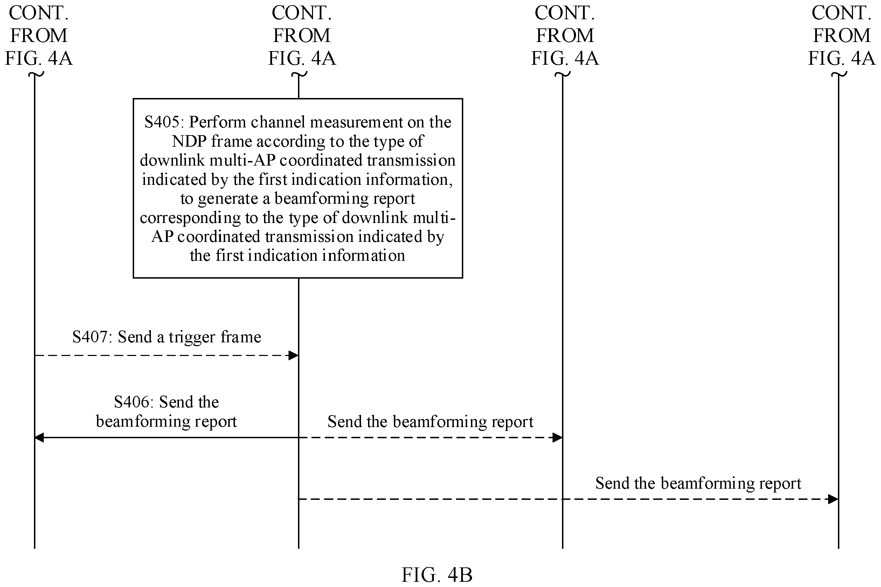

Refer to FIG. 4A and FIG. 4B. FIG. 4A and FIG. 4B are a schematic flowchart of a channel sounding method for multi-AP coordinated transmission according to an embodiment of this application. The first access point may be the AP100 in the wireless communication system shown in FIG. 2, and the second access point may be the AP200 in the wireless communication system shown in FIG. 2. Alternatively, the first access point may be the AP200 in the wireless communication system shown in FIG. 2, and the second access point may be the AP100 in the wireless communication system shown in FIG. 2. The station may be the STA300 or the STA400 in FIG. 2. As shown in FIG. 4A and FIG. 4B, the channel sounding method for multi-AP coordinated transmission in this embodiment of this application includes but is not limited to the following steps.

S401: A first access point generates an announcement frame.

S402: The first access point sends the announcement frame, where the announcement frame carries first indication information, and the first indication information indicates a type of downlink multi-AP coordinated transmission. Correspondingly, a station and one or more second access points receive the announcement frame.

Specifically, the announcement frame may be referred to as an EHT NDPA frame. A specific name of the announcement frame is not limited in this embodiment of this application. For ease of description, the EHT NDPA frame is used in the following description. The EHT NDPA frame may be used to initiate a channel sounding procedure of multi-AP coordinated transmission. The EHT NDPA frame may be further used to trigger the second access point to send an NDP frame.

Optionally, the EHT NDPA frame may carry first indication information. The first indication information may indicate a type of downlink multi-AP coordinated transmission, or the first indication information may indicate a type of CSI that the STA needs to feed back, or the first indication information may indicate a feedback mode (feedback mode) of the STA. The type of downlink multi-AP coordinated transmission may include but is not limited to joint transmission and coordinated beamforming transmission. In this embodiment of this application, the first indication information is carried in the EHT NDPA frame, so that the station can obtain the first indication information earlier, to generate a corresponding beamforming report.

Optionally, the EHT NDPA frame may further carry identifiers of one or more second access points (AP) and identifiers of one or more stations (STA). The identifier of the second access point may indicate an AP that needs to send an NDP frame, and the identifier of the station may indicate a STA that needs to perform channel measurement according to the NDP frame.

Optionally, the EHT NDPA frame may include a user information field and/or a common information field (optional). The user information field includes one or more AP information fields and one or more STA information fields. One AP information field may carry an identifier of one second AP, and one STA information field may carry an identifier (for example, an association identifier (association identifier, AID)) of one STA. The first indication information may be carried in the common information field, or may be carried in the STA information field of the user information field.

It may be understood that, in this embodiment of this application, the first indication information is carried in the STA information field of the user information field in the EHT NDPA frame, and different types of downlink multi-AP coordinated transmission may be simultaneously indicated to a plurality of STAs. For example, a type of downlink multi-AP coordinated transmission indicated by first indication information carried in a STA1 information field is different from a type of downlink multi-AP coordinated transmission indicated by first indication information carried in a STA2 information field. This improves channel sounding efficiency. The first indication information is carried in the STA information field of the user information field in the EHT NDPA frame. This may further support providing different types of multi-AP coordinated transmission services for different stations. For example, after receiving beamforming reports fed back by the STA1 for a JT type, the plurality of APs may provide services for the STA1 in a joint transmission manner. After receiving beamforming reports fed back by the STA2 for a CBF type, the plurality of APs may provide services for the STA2 in a CBF manner. The communication is more flexible, and user service quality is better.

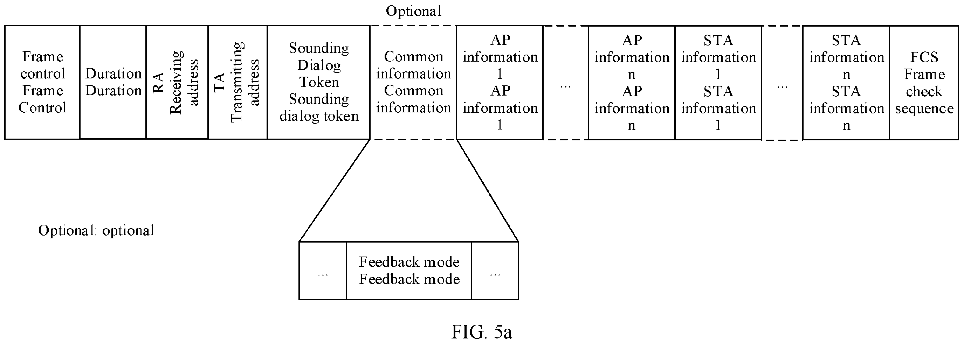

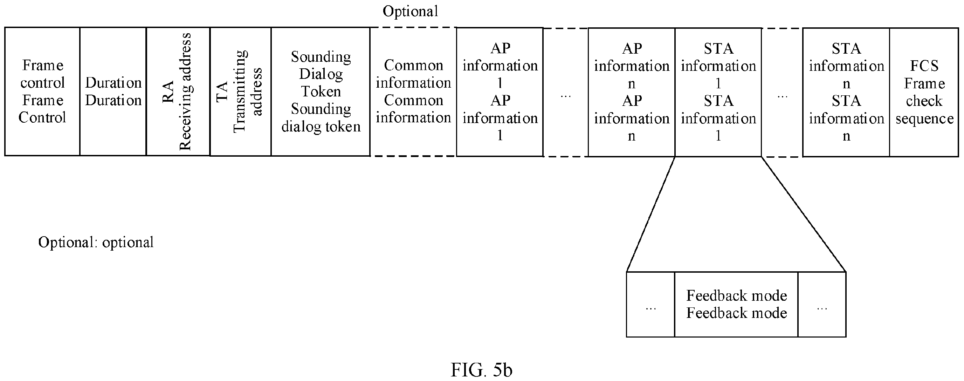

Refer to FIG. 5a. FIG. 5a is a schematic diagram depicting a partial frame structure of an EHT NDPA frame according to an embodiment of this application. As shown in FIG. 5a, the EHT NDPA frame includes a frame control field, a duration field, a receiving address (receiving address, RA) field, a transmitting address (transmitting address, TA) field, a sounding dialog token field, a common information field, one or more AP information fields, one or more STA information fields, a frame check sequence (frame check sequence, FCS) field, and the like. The common information field includes a feedback mode field. In other words, the first indication information is carried in the common information field. Refer to FIG. 5b. FIG. 5b is another schematic diagram depicting a partial frame structure of an EHT NDPA frame according to an embodiment of this application. As shown in FIG. 5b, the EHT NDPA frame includes a frame control field, a duration field, an RA field, a TA field, a sounding dialog token field, a common information field (optional), one or more AP information fields, one or more STA information fields, an FCS field, and the like. The STA information field includes a feedback mode field. In other words, the first indication information is carried in the STA information field. The frame control field may be used to identify a type of a MAC frame, the RA field and the TA field are used to identify a receive end and a transmit end of the MAC frame, and the sounding dialog token field is used to index a sequence number of channel sounding. Optionally, a reserved bit in the sounding dialog token field may be used to distinguish between a high efficiency (high efficient, HE) NDPA frame in 802. 11ax and the EHT NDPA frame in this embodiment of this application.

Optionally, the first AP needs to carry an identifier of a second AP in the EHT NDPA frame to indicate an AP that needs to send an NDP frame. First, the first AP needs to obtain the identifier of the second AP. The identifier of the second AP includes the following several implementations: Implementation 1: The first AP negotiates the identifier of the second AP with the second AP, for example, the first AP allocates an identifier to the second AP; or the second AP sends the identifier of the second AP to each AP (including the first AP) participating in multi-AP coordinated transmission. Implementation 2: The identifier of the second AP may be a MAC address of the second AP, or an 11-bit or 12-bit ID generated according to the MAC address of the second AP. Implementation 3: A module in a device (device) in which the second AP is located serves as a STA (the STA is associated with the first AP), and an AID of the module is used to identify the second AP.

Specifically, for the implementation 1, the first AP is a primary AP, and the second AP is a secondary AP. There may be a plurality of secondary APs, that is, there are a plurality of second APs. The first AP sends an indication frame to a second AP, where the indication frame includes an identifier of the second AP. The indication frame may be a beacon (Beacon) frame sent by the first AP. Optionally, the identifier of the second AP has 11 bits. Optionally, if another second AP receives the indication frame, when allocating an association identifier AID to a station of the another second AP, use of a value that is the same as the identifier of the second AP should be avoided. Optionally, the indication frame may further carry an AID range exclusively used by a second AP. In this way, it can be ensured that AIDs of stations of all second APs are different from each other. Optionally, the indication frame may alternatively be sent by the first AP to a second AP after the first AP receives a request frame sent by the second AP. Optionally, a second AP may carry request information in a sent request frame, to request an AID range exclusively used by the second AP. The first AP may allocate an AID range to the second AP according to the request information of the second AP.

For the implementation 2, the first 11 bits of the AP information field may be the MAC address of the second AP or a partial MAC address. The partial MAC address is generated in the following manner: A MAC address of a specific length is truncated from a complete MAC address as the partial MAC address. Alternatively, the partial MAC address is generated in the following manner: A specific operation is performed on a MAC address, to obtain an address of a shorter length. In an implementation, a 16-bit cyclic redundancy check (cyclic redundancy check, CRC) operation is performed on a 48-bit MAC address, and a result obtained after the CRC operation is used as a 16-bit partial MAC address. Alternatively, 11 bits or 12 bits are truncated from the MAC address of the second AP and placed in the first 11 bits or 12 bits of the AP information field.

For the implementation 3, B0 to B10 (the $0^{th}$ bit to the $10^{th}$ bit) are the AID of the STA associated with the first AP in the device (device) in which the second AP is located. The AP information field should further carry indication information, indicating whether the EHT NDPA frame is sent to the second AP or sent to the STA associated with the first AP in the device (device) in which the second AP is located.

Optionally, the AP information field of the EHT NDPA frame may further carry a manner of sending an NDP frame. The manner of sending an NDP frame herein refers to how a training sequence included in the NDP frame is obtained by an LTF sequence multiplied by rows of a P matrix (P-matrix). Specifically, the AP information field may carry a starting row and a quantity of rows, or carry only a quantity of rows.

S403: The one or more second access points generate null data packet NDP frames.

S404: The one or more second access points send the NDP frames to the station. Correspondingly, the station receives the NDP frames.

Specifically, when the first access point participates in multi-AP coordinated transmission, the first access point may generate an NDP frame, and may send the NDP frame simultaneously/concurrently with the one or more second access points. The NDP frame may be sent at a predefined time interval after the EHT NDPA frame, and the predefined time interval may be an SIFS. In other words, the first access point sends the NDP frame at an interval of one SIFS after completing sending of the EHT NDPA frame, and the one or more second access points also send the NDP frame at an interval of one SIFS after receiving the EHT NDPA frame, so that the first access point and the one or more second access points simultaneously send the NDP frame. When the first access point does not participate in multi-AP coordinated transmission, the plurality of second access points simultaneously/concurrently send the NDP frames. Specifically, the plurality of second access points send the NDP frames at an interval of one SIFS after receiving the EHT NDPA frame.

It may be understood that when the first access point participates in multi-AP coordinated transmission, the EHT NDPA frame may carry identifiers of the one or more second APs. It may be further understood that, when the first access point does not participate in multi-AP coordinated transmission, the EHT NDPA frame carries identifiers of the plurality of second APs.

It may be understood that, when the plurality of access points participating in multi-AP coordinated transmission simultaneously/concurrently send the NDP frames, from a perspective of an access point side, each of the plurality of access points participating in multi-AP coordinated transmission sends one NDP frame, and the plurality of access points send a plurality of NDP frames. However, from a perspective of a station side, an NDP frame received by the station is considered by the station as one NDP frame sent by the plurality of access points. Therefore, in this case, in this embodiment of this application, the plurality of access points participating in multi-AP coordinated transmission only need to send NDP frames, and the station only needs to receive the NDP frames from the plurality of access points.

In an optional embodiment, the first indication information may not only indicate a type of downlink multi-AP coordinated transmission, but also implicitly indicate a manner of sending an NDP frame by an access point participating in multi-AP coordinated transmission. Specifically, if the type of downlink multi-AP coordinated transmission indicated by the first indication information is joint transmission, it implicitly indicates that the manner of sending an NDP frame by an access point participating in multi-AP coordinated transmission is a manner of simultaneous sending. If the type of downlink multi-AP coordinated transmission indicated by the first indication information is coordinated beamforming transmission, it implicitly indicates that a manner of sending an NDP frame by an access point participating in multi-AP coordinated transmission is a manner of sequential sending. After receiving the first indication information, the plurality of access points participating in multi-AP coordinated transmission may determine a manner of sending an NDP frame according to the type of downlink multi-AP coordinated transmission indicated by the first indication information, and send the NDP frame in the determined manner of sending an NDP frame. Optionally, the first indication information is carried in a common information field.

In another optional embodiment, the EHT NDPA frame may carry not only the first indication information, but also second indication information. The second indication information may be carried in an AP information field of a common information field or a user information field of the EHT NDPA frame. The second indication information may explicitly indicate a manner of sending an NDP frame by an access point participating in multi-AP coordinated transmission. The manner of sending an NDP frame by an access point of multi-AP coordinated transmission includes a manner of simultaneous sending and a manner of sequential sending.

Optionally, if the type of downlink multi-AP coordinated transmission indicated by the first indication information is joint transmission, the manner, indicated by the second indication information, of sending an NDP frame by an access point participating in multi-AP coordinated transmission is the manner of simultaneous sending. If the type of downlink multi-AP coordinated transmission indicated by the first indication information is coordinated beamforming transmission, the manner, indicated by the second indication information, of sending an NDP frame by an access point participating in multi-AP coordinated transmission is the manner of sequential sending.

Optionally, if the second indication information is set to a first value (for example, 1), the second indication information indicates that the manner of sending an NDP frame by an access point participating in multi-AP coordinated transmission is the manner of simultaneous sending. If the second indication information is set to a second value (for example, 0), the second indication information indicates that the manner of sending an NDP frame by an access point participating in multi-AP coordinated transmission is the manner of sequential sending.

The following describes the manner of simultaneous sending and the manner of sequential sending with reference to whether the first access point participates in multi-AP coordinated transmission.

(1) Simultaneous sending manner

When the first access point participates in multi-AP coordinated transmission, the first access point may send the NDP frame simultaneously/concurrently with the one or more second access points. Specifically, the first access point sends the NDP frame at an interval of one SIFS after completing sending the EHT NDPA frame, and the one or more second access points also send the NDP frame at an interval of one SIFS after receiving the EHT NDPA frame.

Similarly, when the first access point does not participate in multi-AP coordinated transmission, the plurality of second access points simultaneously/concurrently send the NDP frames. Specifically, the plurality of second access points send the NDP frames at an interval of one SIFS after receiving the NDPA frame.

(2) Sequential sending manner

The EHT NDPA frame may further carry sending time of the NDP frame. When the first access point participates in multi-AP coordinated transmission, the first access point and the one or more second access points may send the NDP frames to the station according to the sending time of the NDP frame indicated in the EHT NDPA frame. Specifically, the first access point sends an NDP frame at an interval of one SIFS after completing sending the EHT NDPA frame, a second access point (for example, a second access point i) sends an NDP frame at an interval of one SIFS after the first access point completes sending the NDP frame, another access point (for example, a second access point j) sends an NDP frame at an interval of one SIFS after the second access point i completes sending the NDP frame, and so on.

Similarly, when the first access point does not participate in multi-AP coordinated transmission, the plurality of second access points send the NDP frames to the station according to the sending time of the NDP frame indicated in the EHT NDPA frame. It may be understood that the manner of sequential sending may also mean that each AP participating in multi-AP coordinated transmission independently and sequentially sends an NDP frame without overlapping sounding cycles of the APs.

It may be understood that, in this embodiment of this application, the second indication information is carried in the EHT NDPA frame, and the plurality of access points participating in multi-AP coordinated transmission send the NDP frames in the manner of simultaneous sending or the manner of sequential sending indicated by the second indication information. The station may also estimate sending time of the NDP frame according to the manner of sending indicated by the second indication information, so that the station can estimate time at which the NDP frame is received. This helps the station receive the NDP frame.

The NDP frame may include a training sequence for channel measurement, and the training sequence may be a long training sequence (long training field, LTF). The LTF includes a legacy long training sequence (legacy long training field, L-LTF), a high efficiency long training sequence (high efficiency long training field, HE-LTF), and/or an extremely high throughput long training sequence (extremely high throughput long training field, EHT-LTF).

It may be understood that the NDP herein may refer to a data packet that has no data field part and does not carry a MAC frame. Optionally, in step S403 and step S404, the second AP may further generate another frame that may be used for channel measurement, which is not limited to an NDP frame. Based on the frame for channel measurement, the station generates a beamforming report corresponding to the type of downlink multi-AP coordinated transmission indicated by the first indication information.

S405: The station performs channel measurement on the NDP frame according to the type of downlink multi-AP coordinated transmission indicated by the first indication information, to generate a beamforming report corresponding to the type of downlink multi-AP coordinated transmission indicated by the first indication information.

Specifically, the type of downlink multi-AP coordinated transmission may include joint transmission and coordinated beamforming transmission. If the type of downlink multi-AP coordinated transmission indicated by the first indication information is joint transmission JT, the station performs channel measurement according to the received NDP frame, measures channel state information of a combined channel between the station and the plurality of access points that send the NDP frame, and generates a beamforming report corresponding to the joint transmission JT. If the type of downlink multi-AP coordinated transmission indicated by the first indication information is coordinated beamforming CBF transmission, the station performs channel measurement according to the received NDP frame, measures a plurality of pieces of channel state information of a plurality of channels between the station and the plurality of access points that send the NDP frames, and generates a beamforming report corresponding to the coordinated beamforming CBF transmission. There is one channel between one access point and the station, and one channel corresponds to one piece of channel state information. After generating the beamforming report, the station sends the beamforming report to the first access point and/or the second access point.

Optionally, the beamforming report corresponding to JT may include an average signal-to-noise ratio of each space-time stream of the combined channel on all subcarriers, and angle values corresponding to a compressed beamforming feedback matrix (compressed beamforming feedback matrix) of a channel corresponding to a plurality of subcarriers (herein referring to a part of subcarriers of all subcarriers). The beamforming report corresponding to CBF transmission may include an average signal-to-noise ratio, on all subcarriers, of each space-time stream of a plurality of channels from an antenna of each AP that sends an NDP frame to an antenna of the STA, and angle values corresponding to a compressed beamforming feedback matrix of a channel corresponding to a plurality of subcarriers (herein referred to as a part of the subcarriers). Subcarriers fed back by the station in the beamforming report are determined by a bandwidth, a resource unit (resource unit, RU) start index, an RU end index, and a grouping field (BW, RU Start Index, RU End Index and Grouping subfields) in an EHT MIMO control field. The compressed beamforming feedback matrix of the channel corresponding to the plurality of subcarriers is obtained after compression, and angle values corresponding to the compressed beamforming feedback matrix of the channel corresponding to each subcarrier may be determined according to a Givens rotation (Givens rotation) algorithm.

Optionally, the first access point may set the first indication information according to a type of subsequently initiated multi-AP coordinated transmission. For example, if subsequently initiated multi-AP coordinated transmission is joint transmission, the first indication information may be set to a first value. If subsequently initiated multi-AP coordinated transmission is coordinated beamforming transmission, the first indication information may be set to a second value. If subsequently initiated multi-AP coordinated transmission may be JT or CBF, the first indication information may be set to a third value. Correspondingly, if the first indication information received by the station is the first value, the first indication information indicates that the type of downlink multi-AP coordinated transmission is JT. If the first indication information received by the station is the second value, the first indication information indicates that the type of downlink multi-AP coordinated transmission is CBF transmission. If the first indication information received by the station is the third value, the first indication information indicates that the type of downlink multi-AP coordinated transmission is JT and CBF transmission. The first indication information may be represented by using 2 bits in the EHT NDPA frame. For example, when a value of the 2 bits is 01 (binary), it indicates joint transmission. When a value of the 2 bits is 10 (binary), it indicates coordinated beamforming transmission. When a value of the 2 bits is 11 (binary), it indicates both joint transmission and coordinated beamforming transmission. For another example, when a value of the 2 bits is binary 00 (decimal 0), it indicates joint transmission. When a value of the 2 bits is binary 01 (decimal 1), it indicates coordinated beamforming transmission. When a value of the 2 bits is binary 10 (decimal 2), it indicates both joint transmission and coordinated beamforming transmission. In this embodiment of this application, only two manners of obtaining a value of a bit are provided as examples. In actual application, there may be another manner of obtaining a value of a bit. This is not limited in this embodiment of this application.

It may be understood that, if there is no case in which subsequently initiated multi-AP coordinated transmission may be both JT and CBF, the first indication information may be set only to the first value or the second value.

Optionally, to better understand a difference between the beamforming report corresponding to joint transmission and the beamforming report corresponding to coordinated beamforming transmission, the following explains, in principle with reference to the figure, a difference between BFRs when the first indication information indicates different types of multi-AP coordinated transmission (or the first indication information has different values).

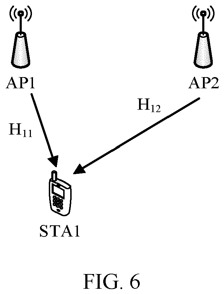

Refer to FIG. 6. FIG. 6 is a schematic diagram of a channel matrix between multiple APs and a single STA according to an embodiment of this application. It is assumed that each AP in FIG. 6 has M antennas, and the STA has N antennas. Both $H_{11}$ and $H_{12}$ in FIG. 6 are channel matrices with dimensions $N \times M$.

(1) When the first indication information indicates joint transmission or the first indication information is the first value, a channel matrix from transmit antennas of all APs (that is, an AP1 and an AP2) to receive antennas of a STA1 is $H_{comp}=[H_{11} \ H_{12}]$, and a dimension of the channel matrix is $N \times 2M$. $H_{comp}$ is written as $H_{comp}=[H_{11}$

$H_{12}]=U_{comp}D_{comp} V_{comp}^{*}$ through singular value decomposition (singular value decomposition, SVD). The STA1 may carry, in a BFR, related information representing CSI, which is specifically information about $D_{comp}$ and $V_{comp}$. Generally, the STA1 may compress $V_{comp}$, obtained through singular value decomposition, of a channel matrix $H_{comp}$ corresponding to a part of or all subcarriers into several pieces of angle information, and carry the information in the BFR. Alternatively, the STA1 may feed back, in the BFR, a value of an average signal-to-noise ratio of one or more space-time streams corresponding to the channel matrix $H_{comp}$ on all subcarriers, to represent related information of the $D_{comp}$. When performing precoding, the AP needs to know only information about D and V, and does not need to know information about the entire $H_{comp}$. In addition, information about H is usually more than information about D and V Feedback overheads can be reduced when the STA feeds back only D and V in the BFR.

(2) When the first indication information indicates coordinated beamforming transmission or the first indication information is the second value, the BFR carries related information representing CSI, which is specifically: $D_{11}$ and $V_{11}$ obtained through singular value decomposition performed on a channel matrix $H_{11}$ between a transmit antenna of the AP1 and a receive antenna of the STA1, and $D_{12}$ and $V_{12}$ obtained through singular value decomposition performed on a channel matrix $H_{12}$ between a transmit antenna of the AP2 and a receive antenna of the STA1.

$H11=U_{11}D_{11} V_{11}^{*}$, $H_{12}=U_{12}D_{12} V_{12}^{*}$ . It may be understood that the STA1 may separately compress $V_{11}$ and $V_{12}$ that are obtained by performing singular value decomposition on channel matrices $H_{11}$ and $H_{12}$ corresponding to a part of or all subcarriers into several pieces of angle information, and carry the information in the BFR. Alternatively, the STA1 may feed back, in the BFR, a value of an average signal-to-noise ratio of one or more space-time streams corresponding to the channel matrix $H_{11}$ on all subcarriers, to represent related information of $D_{11}$, and feed back, in the BFR, a value of an average signal-to-noise ratio of one or more space-time streams corresponding to the channel matrix $H_{12}$ on all subcarriers, to represent related information of $D_{12}$.

It can be learned from (1) and (2) that when subsequently initiated multi-AP coordinated transmission is JT, required information is $D_{comp}$ and $V_{comp}$. When subsequently initiated multi-AP coordinated transmission is CBF, required information is $D_{11}$, $V_{11}$ and $D_{12}$, $V_{12}$. It may be understood that the matrix $V_{comp}$ is not a combination of the matrices $V_{11}$ and $V_{12}$ (feedback by each AP), and cannot be reconstructed from $V_{11}$ and $V_{12}$. Therefore, when the BFR fed back by the STA carries $D_{comp}$ and $V_{comp}$, the AP cannot convert the BFR into $D_{11}$, $V_{11}$ and $D_{12}$, $V_{12}$, and vice versa.

(3) When the first indication information indicates joint transmission and coordinated beamforming transmission, or the first indication information is the third value, the information required by the AP includes: $D_{11}$ and $V_{11}$ obtained through singular value decomposition performed on a channel matrix $H_{11}$ from a transmit antenna of the AP1 to a receive antenna of the STA1, $D_{12}$ and $V_{12}$ obtained through singular value decomposition performed on a channel matrix $H_{12}$ from a transmit antenna of the AP2 to a receive antenna of the STA1, and $D_{comp}$ and $V_{comp}$ obtained through singular value decomposition performed on a matrix $H_{comp}$ from transmit antennas of all APs (that is, the AP1 and the AP2) and receive antennas of the STA1.

Optionally, to reduce overheads, the STA1 may feed back related information representing CSI, that is, $D_{11}$, $V_{11}$ and $D_{12}$, $V_{12}$, but does not feed back $D_{comp}$ and $V_{comp}$. It may be understood that the STA1 may separately compress $V_{11}$ and $V_{12}$ that are obtained by performing singular value decomposition on channel matrices $H_{11}$ and $H_{12}$ corresponding to a part of or all subcarriers into several pieces of angle information, and carry the information in the BFR. Alternatively, the STA1 may feed back, in the BFR, a value of an average signal-to-noise ratio of one or more space-time streams corresponding to the channel matrix $H_{11}$ on all subcarriers, to represent related information of $D_{11}$, and feed back, in the BFR, a value of an average signal-to-noise ratio of one or more space-time streams corresponding to the channel matrix $H_{12}$ on all subcarriers, to represent related information of $D_{12}$. To obtain $D_{comp}$ and $V_{comp}$, in an implementation, the STA may further feed back Un and $U_{12}$. After obtaining Un, $D_{11}$, $V_{11}$ and $U_{12}$, $D_{12}$, $V_{12}$, the AP may restore $H_{11}$ and $H_{12}$ according to $U_{11}$, $D_{11}$, $V_{11}$ and $U_{12}$, $D_{12}$, $V_{12}$, to concatenate to obtain $H_{comp}$, and then decompose to obtain $D_{comp}$ and $V_{comp}$ to obtain SVD, to meet JT requirements. In another implementation, the STA1 may feed back a square matrix X, where $X = U_{11}^{*} U_{12}$.

Performing SVD decomposition on H may be equivalent to performing eigenvalue decomposition on H×H, as shown in the following formula:

$$\mathbf{H}_{comp} = \begin{bmatrix} \mathbf{H}_{11} & \mathbf{H}_{12} \end{bmatrix} = \begin{bmatrix} \mathbf{U}_{11}\mathbf{D}_{11}\mathbf{V}_{11}^{*} & \mathbf{U}_{12}\mathbf{D}_{12}\mathbf{V}_{12}^{*} \end{bmatrix}$$

$$\mathbf{H}_{comp}^{*}\mathbf{H}_{comp} = \begin{bmatrix} \mathbf{V}_{11}\mathbf{D}_{11}^{2}\mathbf{V}_{11}^{*} & \mathbf{V}_{11}\mathbf{D}_{11}\mathbf{X}\mathbf{D}_{12}\mathbf{V}_{12}^{*} \\ \mathbf{V}_{12}\mathbf{D}_{12}\mathbf{X}^{*}\mathbf{D}_{11}\mathbf{V}_{11}^{*} & \mathbf{V}_{12}\mathbf{D}_{12}^{2}\mathbf{V}_{12}^{*} \end{bmatrix}$$

The square matrix $\mathbf{X} = \mathbf{U}_{11}^{*}\mathbf{U}_{12}$ is usually very small (a size of X depends on a quantity of receive antennas). For example, it is assumed that a quantity of transmit antennas of AP1 and AP2 is 16, and a quantity of receive antennas of the STA is 2, a size of X is a 2×2 matrix.

It can be learned that, based on known $D_{11}$, $D_{12}$, $V_{11}$, and $V_{12}$, $\mathbf{H}_{comp}^{*} \mathbf{H}_{comp}$ can be obtained by additionally feeding back X, and then eigenvalue decomposition is performed on $\mathbf{H}_{comp}^{*} \mathbf{H}_{comp}$ to obtain $V_{comp}$. Optionally, V and U (or X) may be compressed into angle values by using a Givens rotations algorithm, and the angle value is carried in the BFR.

It may be understood that, for a single-user-MIMO case, in this application, Un and $U_{12}$ are compressed, and X is fed back instead of Un and $U_{12}$, so that feedback overheads can be reduced. In addition, because SVD calculation amount of the STA is small, calculation complexity can be reduced. In conclusion, when the type of downlink multi-AP coordinated transmission is joint transmission, the BFR carries $D_{comp}$ and $V_{comp}$ of a large channel matrix (that is, $H_{comp}$). When the type of downlink multi-AP coordinated transmission is coordinated beamforming transmission, the BFR carries $D_{11}$, $V_{11}$, and $D_{12}$, $V_{12}$ of small channel matrices (that is, $H_{11}$ and $H_{12}$). The type of downlink multi-AP coordinated transmission may be JT or CBF. The BFR carries $D_{11}$, $V_{11}$, and $D_{12}$, $V_{12}$, and $U_{11}$, $U_{12}$ of small channel matrices (that is, $H_{11}$ and $H_{12}$), or the BFR carries $D_{11}$, $V_{11}$, and $D_{12}$, $V_{12}$, and X of small channel matrices (that is, $H_{11}$ and $H_{12}$).

It may be understood that, when the first indication information is set to the first value, the STA needs to perform channel measurement according to a received NDP frame, and a beamforming report fed back includes D and V of a large channel matrix from transmit antennas of all APs to receive antennas of the STA. When the first indication information is set to the second value, the STA needs to perform channel measurement according to a received NDP frame, and a beamforming report fed back includes D and V of a small channel matrix from each AP to the STA. When the first indication information is set to the third value, the STA needs to perform channel measurement according to a received NDP frame, and a beamforming report fed back includes U, D, and V of a small channel matrix from each AP to the STA. The AP may restore the small channel matrix H according to the U, D, and V of the small channel matrix, to concatenate to obtain the large channel matrix $H_{comp}$, and further obtain $D_{comp}$ and $V_{comp}$ of the large channel matrix, so that both JT and CBF can be supported in a subsequent data transmission process.

It may be understood that when a quantity of APs participating in multi-AP coordinated transmission is greater than or equal to 3, feeding back X in the BFR cannot bring an additional gain. To be specific, when the quantity of APs participating in multi-AP coordinated transmission is greater than or equal to 3, if the first indication information is the third value, D, V, and U are fed back in the BFR.

S406: The station sends the beamforming report to the first access point and/or the second access point, where the beamforming report is used to feed back channel state information of the station. Correspondingly, the first access point receives the beamforming report.

Specifically, the beamforming report may include an EHT MIMO control field and a beamforming report field. Optionally, in addition to feeding back CSI of the STA, the beamforming report may further feed back channel quality information (channel quality information, CQI) of the STA. The CSI of the STA may be represented by D and V obtained through singular value decomposition performed on a channel matrix between the STA and the AP.

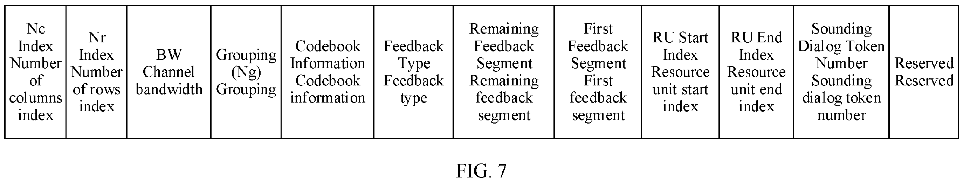

Refer to FIG. 7. FIG. 7 is a schematic diagram depicting a structure of an EHT MIMO control field according to an embodiment of this application. As shown in FIG. 7, the EHT MIMO control field may include a number of columns index, a number of rows index, channel bandwidth, grouping, a feedback type, a remaining feedback segment, a first feedback segment, a resource unit start index, a resource unit end index, a sounding dialog token number, a reserved bit, and the like.

Optionally, when the second access point does not listen to the beamforming report sent by the station, after receiving the beamforming report, the first access point may forward the beamforming report to one or more second access points that send the NDP frame (or the plurality of access points participating in multi-AP coordinated transmission), so that the one or more second access points perform subsequent data transmission based on the beamforming report. It is clear that, when the second access point listens to the beamforming report sent by the station, the second access point may receive the beamforming report sent by the station, and the first access point does not need to forward the beamforming report after receiving the beamforming report.

Optionally, after the plurality of access points (for example, the first access point and one or more second access points) participating in multi-AP coordinated transmission all obtain the beamforming reports, the plurality of access points may communicate with the station through a corresponding type of coordinated transmission. For example, if the type of downlink multi-AP coordinated transmission indicated by the first indication information is joint transmission, after obtaining the beamforming report, the plurality of access points participating in multi-AP coordinated transmission may transmit data to the station through joint transmission. Similarly, if the type of downlink multi-AP coordinated transmission indicated by the first indication information is coordinated beamforming transmission, after obtaining the beamforming report, the plurality of access points participating in multi-AP coordinated transmission may transmit data to the station through coordinated beamforming.

Optionally, before step S406, the method may further include step S407: The first access point sends a trigger frame to the station, to trigger a plurality of stations that perform channel measurement to simultaneously feed back measurement reports/beamforming reports. The trigger frame may be referred to as a beamforming report poll trigger (beamforming report poll trigger, BFRP Trigger) frame. A name of the trigger frame is not limited in this embodiment of this application. For ease of description, the BFRP trigger frame is used in the following description.

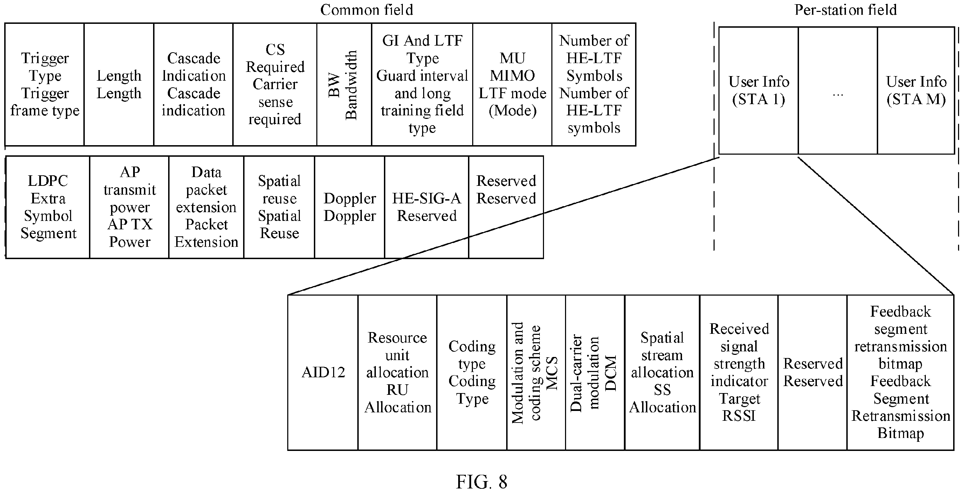

Refer to FIG. 8. FIG. 8 is a schematic diagram depicting a partial frame structure of a BFRP trigger frame according to an embodiment of this application. As shown in FIG. 8, the BFRP trigger frame may include a common field and a station field. Each station field includes resource indication information and a feedback segment retransmission bitmap, indicating segments whose channel state information is fed back by the STA.

It may be understood that, for better understanding of the channel sounding method for multi-AP coordinated transmission provided in FIG. 4A and FIG. 4B, the following briefly describes a time sequence procedure of the channel sounding method for multi-AP coordinated transmission with reference to several specific examples. The following specific examples are merely examples for ease of understanding. In actual application, a time sequence procedure of the channel sounding method for multi-AP coordinated transmission in this application may include more or less procedures than those in the following specific examples.

In the following specific example, it is assumed that an AP1 is a first access point, an AP2 and an AP3 are different second access points, and a STA1 and a STA are stations that need to perform channel measurement. Example 1 shows a time sequence procedure in which access points participating in multi-AP coordinated transmission simultaneously send NDP frames. Example 2 shows a time sequence procedure in which access points participating in multi-AP coordinated transmission sequentially send NDP frames.

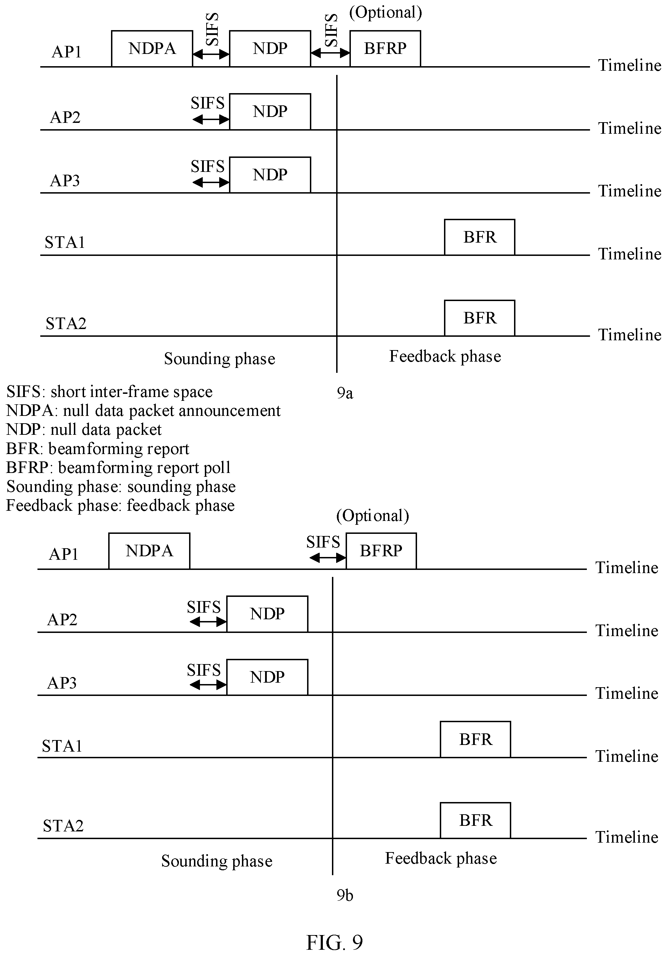

Example 1: Refer to FIG. 9. FIG. 9 is a schematic diagram of a time sequence of a channel sounding method for multi-AP coordinated transmission according to an embodiment of this application. As shown in FIG. 9, the channel sounding method for multi-AP coordinated transmission may be divided into a sounding phase and a feedback phase. As shown in 9a of FIG. 9, the AP1 participates in subsequent multi-AP coordinated transmission. As shown in 9b of FIG. 9, the AP1 does not participate in subsequent multi-AP coordinated transmission. As shown in 9a of FIG. 9, the sounding phase includes: The AP1 sends an EHT NDPA frame, and sends an NDP frame at an interval of one SIFS; and the AP2 and the AP3 send NDP frames simultaneously with the AP1. As shown in 9b of FIG. 9, the sounding phase includes: The AP1 sends an EHT NDPA frame, and the AP2 and the AP3 simultaneously send NDP frames at an interval of one SIFS after receiving the EHT NDPA frame. Feedback phases of 9a and 9b of FIG. 9 are the same, including: The AP1 sends a BFRP trigger frame, to trigger the STA1 and the STA2 to simultaneously feed back beamforming reports; and after receiving the BFRP trigger frame, the STA1 and the STA2 simultaneously feed back beamforming reports generated by performing channel measurement according to the NDP frame.

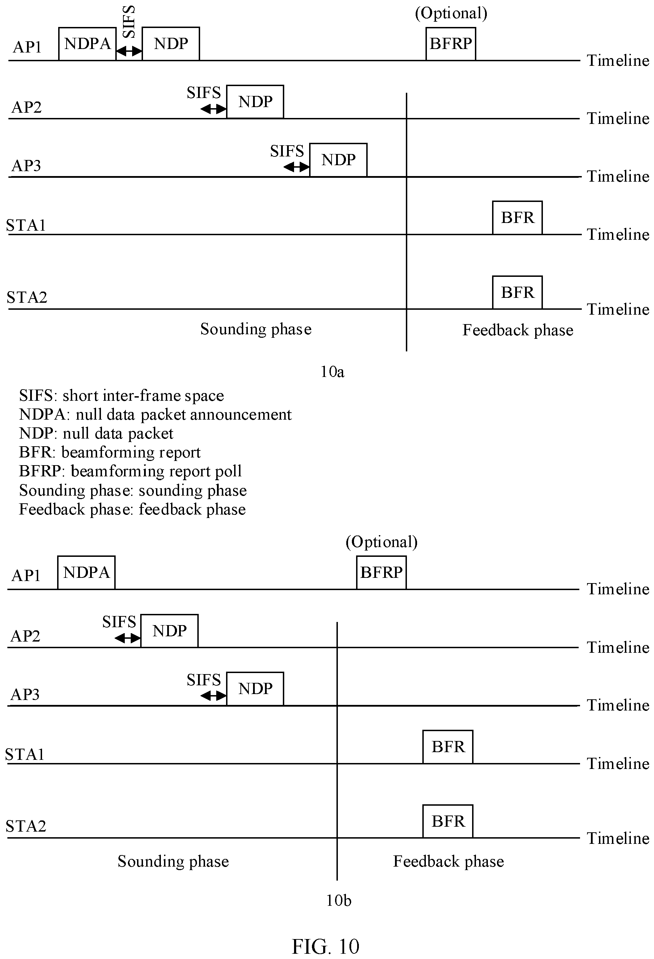

Example 2: Refer to FIG. 10. FIG. 10 is a schematic diagram of another time sequence of a channel sounding method for multi-AP coordinated transmission according to an embodiment of this application. As shown in FIG. 10, the channel sounding method for multi-AP coordinated transmission may also be divided into a sounding phase and a feedback phase. As shown in 10a of FIG. 10, the AP1 participates in subsequent multi-AP coordinated transmission. As shown in 10b of FIG. 10, the AP1 does not participate in subsequent multi-AP coordinated transmission. As shown in 10a of FIG. 10, the sounding phase includes: The AP1 sends an EHT NDPA frame, and sends an NDP frame at an interval of one SIFS; the AP2 sends an NDP frame at an interval of one SIFS after the AP1 completes sending the NDP frame; and the AP3 sends an NDP frame at an interval of one SIFS after the AP2 completes sending the NDP frame. As shown in 10b of FIG. 10, the sounding phase includes: The AP1 sends an EHT NDPA frame; the AP2 sends an NDP frame at an interval of one SIFS after receiving the EHT NDPA frame; and the AP3 sends an NDP frame at an interval of one SIFS after the AP2 completes sending the NDP frame. Feedback phases of 10a and 10b of FIG. 10 are the same, including: The AP1 sends a BFRP trigger frame, to trigger the STA1 and the STA2 to simultaneously feed back beamforming reports; and after receiving the BFRP trigger frame, the STA1 and the STA2 simultaneously feed back beamforming reports generated by performing channel measurement according to the NDP frame.

In this embodiment of this application, the first indication information is carried in the announcement frame, to indicate the type of downlink multi-AP coordinated transmission (joint transmission or coordinated beamforming transmission), so that after receiving the announcement frame, the STA performs channel measurement on the received NDP frame according to the type of downlink multi-AP coordinated transmission indicated by the first indication information, to generate the beamforming report corresponding to the type of downlink multi-AP coordinated transmission, and feeds back the beamforming report. Channel sounding in a joint transmission scenario can be implemented, and channel sounding in a coordinated beamforming scenario can also be implemented, that is, unified channel sounding in a multi-AP coordinated transmission scenario can be implemented, to support multi-AP coordinated transmission of different types, reduce inter-cell interference, and improve quality of service for a user.

To better understand the technical solutions of this application, the following further describes the channel sounding method for multi-AP coordinated transmission in this application by using several examples. It may be understood that the following several examples are described by using two APs (an AP1 and an AP 2) and one STA as an example.

In an example, the AP1 sends an EHT NDPA frame, and a common information field or a user information field (for example, a STA information field in a user information field) of the EHT NDPA frame carries first indication information, to indicate a type of downlink multi-AP coordinated transmission. The AP1 and AP2 simultaneously/concurrently send NDP frames. The STA feeds back a corresponding beamforming report according to the type of downlink multi-AP coordinated transmission indicated by the first indication information. After receiving the corresponding beamforming reports, the AP1 and the AP2 provide services for the STA through multi-AP coordinated transmission of a same type. For example, after receiving beamforming reports fed back by the STA for joint transmission, the AP1 and the AP2 provide services for the STA through joint transmission. After receiving beamforming reports fed back by the STA for coordinated beamforming transmission, the AP1 and the AP2 provide services for the STA through coordinated beamforming transmission.

It may be understood that, in this embodiment of this application, regardless of whether the type of downlink multi-AP coordinated transmission indicated by the first indication information is JT or CBF, NDP frames are sent in a unified manner, that is, NDP frames are sent at the same time. Therefore, a procedure is easier to implement. In this embodiment of this application, the first indication information is further carried in the STA information field in the user information field of the EHT NDPA frame. This may support providing different types of multi-AP coordinated transmission services for different stations. The communication is more flexible, and user service quality is better.

In another example, the AP1 sends an EHT NDPA frame, and the EHT NDPA frame carries first indication information, to indicate a type of downlink multi-AP coordinated transmission, and further implicitly indicate a manner of sending an NDP frame by an access point participating in multi-AP coordinated transmission. After receiving the EHT NDPA frame, the AP2 determines a manner of sending an NDP frame according to the type of downlink multi-AP coordinated transmission indicated by the first indication information, and sends the NDP frame in the determined manner of sending an NDP frame. If the type indicated by the first indication information is JT, the AP1 and the AP2 simultaneously send NDP frames. If the type indicated by the first indication information is JT, the AP1 and the AP2 sequentially send NDP frames. That is, the AP 2 sends an NDP frame at a time interval after the AP1 completes sending an NDP frame, or the AP1 sends an NDP frame at a time interval after the AP2 completes sending an NDP frame. The STA feeds back a corresponding beamforming report according to the type of downlink multi-AP coordinated transmission indicated by the first indication information. After receiving the corresponding beamforming reports, the AP1 and the AP2 provide services for the STA through multi-AP coordinated transmission of a same type.

Optionally, the first indication information may be carried in a common information field of the EHT NDPA frame.

It may be understood that a manner of sending an NDP frame in this embodiment of this application adapts to a type indicated by the first indication information. To be specific, when the type indicated by the first indication information is JT, the NDP frames are sent concurrently. When the type indicated by the first indication information is CBF, the NDP frames are sequentially sent. Therefore, the NDP frame is sent in a more flexible and diversified manner. The STA also feeds back a corresponding beamforming report according to the type indicated by the first indication information. When the type indicated by the first indication information is CBF, the NDP frames are sequentially sent, and the STA may directly obtain, through measurement, a channel matrix $H_{11}$ from the AP1 to the STA and a channel matrix $H_{12}$ from the AP2 to the STA, without decomposing $H_{11}$ and $H_{12}$ from a channel matrix $H_{comp}$ obtained when the NDP frames are simultaneously sent, reducing calculation complexity of the STA.

In still another example, the AP1 sends an EHT NDPA frame, and the EHT NDPA frame carries first indication information and second indication information. The first indication information indicates a type of downlink multi-AP coordinated transmission, and the second indication information explicitly indicates a manner of sending an NDP frame by an access point participating in multi-AP coordinated transmission. After receiving the EHT NDPA frame, the AP2 sends an NDP frame in the manner of sending an NDP frame indicated by the second indication information. If the type indicated by the first indication information is JT, and the second indication information indicates that the manner of sending an NDP frame is simultaneous sending, the AP1 and the AP2 simultaneously/concurrently send NDP frames. If the type indicated by the first indication information is the CBF, and the second indication information indicates that the manner of sending an NDP frame may be sequential sending or simultaneous sending, the AP1 and the AP2 send the NDP frames in the manner indicated by the second indication information. In other words, if the second indication information indicates simultaneous sending, the AP1 and the AP2 simultaneously send NDP frames. If the second indication information indicates sequential sending, the AP1 and the AP2 sequentially send NDP frames. The STA feeds back a corresponding beamforming report according to the type of downlink multi-AP coordinated transmission indicated by the first indication information. After receiving the corresponding beamforming reports, the AP1 and the AP2 provide services for the STA through multi-AP coordinated transmission of a same type. Both the first indication information and the second indication information may be carried in a common information field or a user information field of the EHT NDPA frame. A difference lies in that the first indication information is carried in a STA information field of the user information field, and the second indication information is carried in an AP information field of the user information field.

It may be understood that in this embodiment of this application, two pieces of indication information is used to respectively indicate a type of downlink multi-AP coordinated transmission and a manner of sending an NDP frame. In addition, the two pieces of indication information are carried in a flexible manner, and a meaning of each piece of indication information is clear. In this embodiment of this application, when the type indicated by the first indication information is the CBF, the NDP frames may be sequentially sent, and the NDP frames may be simultaneously/concurrently sent. This can improve flexibility of a manner of sending an NDP frame in the case of the CBF.

The foregoing content describes in detail the method provided in this application. To better implement the foregoing solutions in embodiments of this application, embodiments of this application further provide corresponding apparatuses or devices.

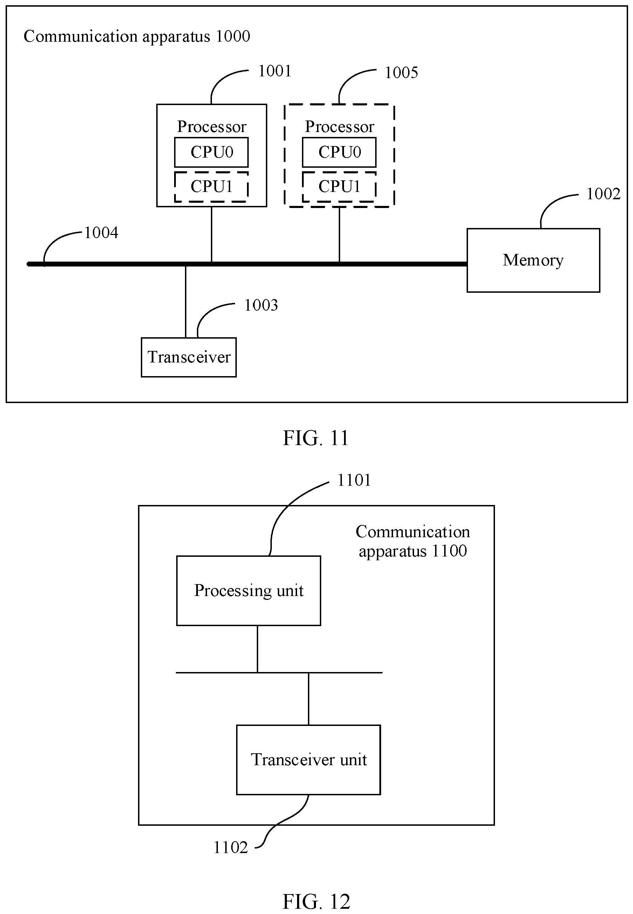

Refer to FIG. 11. FIG. 11 is a schematic diagram depicting a structure of a communication apparatus according to an embodiment of this application. As shown in FIG. 11, the communication apparatus 1000 may be the station, the first access point, or the second access point in the foregoing embodiments, or may be a chip or a processing system in a station, a first access point, or a second access point, and may implement the methods and functions in the foregoing embodiments. Due to a difference in integration degrees, the communication apparatus 1000 may include one or more of the components shown in FIG. 11. The components shown in FIG. 11 may include at least one processor 1001, a memory 1002, a transceiver 1003, and a communication bus 1004. The processor, the transceiver, the memory, and the like are connected by using a bus. A specific connection medium between the foregoing components is not limited in this embodiment of this application.

The following describes each component of the communication apparatus 1000 in detail with reference to FIG. 11.

The processor 1001 is a control center of the communication apparatus 1000, and may be one processor or may be a collective term of a plurality of processing elements. For example, the processor 1001 is a central processing unit (central processing unit, CPU), an application-specific integrated circuit (Application Specific Integrated Circuit, ASIC), or one or more integrated circuits configured to implement this embodiment of this application, for example, one or more digital signal processors (digital signal processor, DSP), or one or more field programmable gate arrays (Field Programmable Gate Array, FPGA). The processor 1001 may perform various functions of a communication device by running or executing a software program stored in the memory 1002 and invoking data stored in the memory 1002. During specific implementation, in an embodiment, the processor 1001 may include one or more CPUs, for example, a CPU0 and a CPU1 in FIG. 11.

During specific implementation, in an embodiment, the communication apparatus 1000 may include a plurality of processors, for example, the processor 1001 and a processor 1005 shown in FIG. 11. Each of the processors may be a single-core processor (single-CPU) or may be a multi-core processor (multi-CPU). The processor herein may be one or more communication devices, circuits, and/or processing cores configured to process data (for example, computer program instructions).

The memory 1002 may be a read-only memory (read-only memory, ROM) or another type of static storage communication device that can store static information and instructions, or a random access memory (random access memory, RAM) or another type of dynamic storage communication device that can store information and instructions, or may be an electrically erasable programmable read-only memory (Electrically Erasable Programmable Read-Only Memory, EEPROM), a compact disc read-only memory (Compact Disc Read-Only Memory, CD-ROM) or other compact disc storage, optical disc storage (including a compact disc, a laser disc, an optical disc, a digital versatile disc, a Blu-ray disc, and the like), a magnetic disk storage medium or another magnetic storage communication device, or any other medium that can be used to carry or store expected program code in an instruction form or a data structure form and that can be accessed by a computer. However, the memory 1002 is not limited thereto. The memory 1002 may exist independently, and is connected to the processor 1001 by using the communication bus 1004. Alternatively, the memory 1002 may be integrated with the processor 1001. The memory 1002 is configured to store a software program for performing the solutions of this application, and the processor 1001 controls the execution.

The transceiver 1003 is configured to communicate with another device. Certainly, the transceiver 1003 may be further configured to communicate with a communication network. The communication network is, for example, Ethernet, a radio access network (radio access network, RAN), or a wireless local area network. The transceiver 1003 may include a receiving unit for implementing a receiving function, and a sending unit for implementing a sending function.

The communication bus 1004 may be an industry standard architecture (Industry Standard Architecture, ISA) bus, a peripheral component interconnect (Peripheral Component, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 11, but this does not mean that there is only one bus or only one type of bus.

In an example, the communication apparatus 1000 may be an entire device, and the communication apparatus may include a processor 1001, a memory 1002, a transceiver 1003, and a communication bus 1004. Optionally, another component, for example, a display screen, a user interface, or a signal detector may be further included.

Optionally, the communication apparatus 1000 is a station, and may be configured to implement the methods and the functions of the station in the foregoing embodiments. For example, the memory stores instructions, and when the processor invokes the instructions, the foregoing methods and functions are implemented. For example, the processor is configured to generate signaling or a frame, and the transceiver is configured to send the signaling or the frame. For example, the processor is configured to perform step S405 and the like, and the transceiver is configured to perform step S406 and the like.

Optionally, the communication apparatus 1000 is a first access point, and may be configured to implement the methods and the functions related to the first access point in the foregoing embodiments. For example, the memory stores instructions, and when the processor invokes the instructions, the foregoing methods and functions are implemented. For example, the processor is configured to generate signaling or a frame, and the transceiver is configured to send the signaling or the frame. For example, the processor is configured to perform step S401 and the like, and the transceiver is configured to perform step S402 and the like.

Optionally, the communication apparatus 1000 is a second access point, and may be configured to implement the methods and the functions of the second access point in the foregoing embodiments. For example, the memory stores instructions, and when the processor invokes the instructions, the foregoing methods and functions are implemented. For example, the processor is configured to generate signaling or a frame, and the transceiver is configured to send the signaling or the frame. For example, the processor is configured to perform step S403 and the like, and the transceiver is configured to perform step S404 and the like.

In another example, the communication apparatus 1000 may be a chip system or a processing system in a station, a first access point, or a second access point, so that a device on which the chip system or the processing system is installed implements the methods and functions in the foregoing embodiments. In this case, the communication apparatus 1000 may include some components shown in FIG. 11. For example, the communication apparatus 1000 includes a processor. The processor may be coupled to a memory, invoke instructions in the memory, and execute the instructions, so that a device configured or installed with the chip system or the processing system implements the methods and the functions in the foregoing embodiments. Optionally, the memory may be a component in the chip system or the processing system, or may be a coupled/connected component outside the chip system or the processing system. In an example, the chip system or the processing system is installed in a station, so that the station can implement corresponding methods and functions in the foregoing embodiments. In another example, the chip system or the processing system is installed in a first access point, so that the first access point can implement the corresponding methods and functions in the foregoing embodiments. In still another example, the chip system or the processing system is installed in a second access point, so that the second access point can implement the corresponding methods and functions in the foregoing embodiments.

The chip system or the processing system may support communication based on the 802.11 series protocols, for example, 802.11be, 802.11ax, and 802.11ac. The chip system may be installed in various devices supporting WLAN transmission scenarios. The devices in the WLAN transmission scenarios have been described in the specification of this application, and details are not described herein again.

In embodiments of this application, the station, the first access point, or the second access point may be divided into functional modules based on the foregoing method examples. For example, the functional modules may be obtained through division based on corresponding functions, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation.

When an integrated unit is used, refer to FIG. 12. FIG. 12 is a schematic diagram depicting another structure of a communication apparatus according to an embodiment of this application. As shown in FIG. 12, the communication apparatus 1100 may be a chip or a processing system in a multi-link device, and the communication apparatus 1100 may perform an operation of the station, the first access point, or the second access point in the foregoing method embodiments. The communication apparatus 1100 includes a processing unit 1101 and a transceiver unit 1102.

In an example, the communication apparatus 1100 is a station.

The processing unit 1101 may be configured to control and manage an action of the communication apparatus 1100, for example, generating signaling or a frame, and for another example, controlling an operation of the transceiver unit 1102. Optionally, if the communication apparatus 1100 includes a storage unit, the processing unit 1101 may further execute a program or instructions stored in the storage unit, to enable the communication apparatus 1100 to implement the methods and functions in the foregoing embodiments.

For example, the processing unit 1101 may be configured to perform step S405 in FIG. 4A and FIG. 4B, and/or another process of the technology described in this specification. All related content of the steps in the foregoing method embodiments may be cited in function descriptions of the corresponding functional modules. Details are not described herein again.

For example, the transceiver unit 1102 may be configured to perform step S406 in FIG. 4A and FIG. 4B, and/or another process of the technology described in this specification. All related content of the steps in the foregoing method embodiments may be cited in function descriptions of the corresponding functional modules. Details are not described herein again.

For example, the communication apparatus 1100 may be the communication apparatus shown in FIG. 11, the processing unit 1101 may be the processor 1001 in FIG. 11, and the transceiver unit 1102 may be the transceiver 1003 in FIG. 11. Optionally, the communication apparatus 1100 may further include a memory. The memory is configured to store program code and data that correspond to the channel sounding method for multi-AP coordinated transmission performed by the communication apparatus 1100 provided above. All descriptions of related content of the components in FIG. 11 may be cited in function descriptions of corresponding components of the communication apparatus 1100. Details are not described herein again.

For example, the communication apparatus 1100 may alternatively be a chip or a processor, the processing unit 1101 is a processing circuit in the chip or the processor, and the transceiver unit 1102 may be an input/output circuit in the chip or the processor. The input/output circuit is an interface for mutual communication or data exchange between the chip or the processor and another coupled component, ensuring that signaling, data information, or a program instruction is input to the chip or the processor for processing, processed data or signaling is output to the another coupled component, and a station on which the chip or the processor is installed is controlled to implement a function.

In another example, the communication apparatus 1100 is a first access point.

For example, the processing unit 1101 may be configured to perform step S401 in FIG. 4A and FIG. 4B, and/or another process of the technology described in this specification. All related content of the steps in the foregoing method embodiments may be cited in function descriptions of the corresponding functional modules. Details are not described herein again.

For example, the transceiver unit 1102 may be configured to perform step S402 in FIG. 4A and FIG. 4B, and/or another process of the technology described in this specification. All related content of the steps in the foregoing method embodiments may be cited in function descriptions of the corresponding functional modules. Details are not described herein again.

For example, the communication apparatus 1100 may be the communication apparatus shown in FIG. 11, the processing unit 1101 may be the processor 1001 in FIG. 11, and the transceiver unit 1102 may be the transceiver 1003 in FIG. 11. Optionally, the communication apparatus 1100 may further include a memory. The memory is configured to store program code and data that correspond to the channel sounding method for multi-AP coordinated transmission performed by the communication apparatus 1100 provided above. All descriptions of related content of the components in FIG. 11 may be cited in function descriptions of corresponding components of the communication apparatus 1100. Details are not described herein again.

For example, the communication apparatus 1100 may alternatively be a chip or a processor, the processing unit 1101 is a processing circuit in the chip or the processor, and the transceiver unit 1102 may be an input/output circuit in the chip or the processor. The input/output circuit is an interface for mutual communication or data exchange between the chip or the processor and another coupled component, ensuring that signaling, data information, or a program instruction is input to the chip or the processor for processing, processed data or signaling is output to the another coupled component, and a first access point on which the chip or the processor is installed is controlled to implement a function.

In another example, the communication apparatus 1100 is a second access point.

For example, the processing unit 1101 may be configured to perform step S403 in FIG. 4A and FIG. 4B, and/or another process of the technology described in this specification. All related content of the steps in the foregoing method embodiments may be cited in function descriptions of the corresponding functional modules. Details are not described herein again.

For example, the transceiver unit 1102 may be configured to perform step S404 in FIG. 4A and FIG. 4B, and/or another process of the technology described in this specification. All related content of the steps in the foregoing method embodiments may be cited in function descriptions of the corresponding functional modules. Details are not described herein again.

For example, the communication apparatus 1100 may be the communication apparatus shown in FIG. 11, the processing unit 1101 may be the processor 1001 in FIG. 11, and the transceiver unit 1102 may be the transceiver 1003 in FIG. 11. Optionally, the communication apparatus 1100 may further include a memory. The memory is configured to store program code and data that correspond to the channel sounding method for multi-AP coordinated transmission performed by the communication apparatus 1100 provided above. All descriptions of related content of the components in FIG. 11 may be cited in function descriptions of corresponding components of the communication apparatus 1100. Details are not described herein again.

For example, the communication apparatus 1100 may alternatively be a chip or a processor, the processing unit 1101 is a processing circuit in the chip or the processor, and the transceiver unit 1102 may be an input/output circuit in the chip or the processor. The input/output circuit is an interface for mutual communication or data exchange between the chip or the processor and another coupled component, ensuring that signaling, data information, or a program instruction is input to the chip or the processor for processing, processed data or signaling is output to the another coupled component, and a second access point on which the chip or the processor is installed is controlled to implement a function.

An embodiment of this application further provides a computer-readable storage medium. The computer-readable storage medium stores computer program code. When the processor executes the computer program code, an electronic device performs the method in the embodiment shown in FIG. 4A and FIG. 4B.

An embodiment of this application further provides a computer program product. When the computer program product runs on a computer, the computer is enabled to perform the method in the embodiment shown in FIG. 4A and FIG. 4B.

An embodiment of this application further provides a communication apparatus. The apparatus may exist in a product form of a chip. A structure of the apparatus includes a processor and an interface circuit. The processor is configured to communicate with another apparatus through an interface circuit, to enable the apparatus to perform the method in the embodiment shown in FIG. 4A and FIG. 4B.

An embodiment of this application further provides a communication system, including a station, a first access point, and a second access point. The station, the first access point, and the second access point may perform the method in the embodiment shown in FIG. 4A and FIG. 4B.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium that facilitates transmission of a computer program from one place to another. The storage medium may be any available medium accessible to a general-purpose or a special-purpose computer.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

**Claims**

1. A communication apparatus, used in a station, comprising:

   a transceiver unit, configured to receive an announcement frame from a first access point, wherein the announcement frame carries first indication information, and the first indication information indicates a type of downlink multi-AP coordinated transmission, wherein
   the transceiver unit is further configured to receive NDP frames from a plurality of access points; and
   a processing unit, configured to perform channel measurement on the NDP frame according to the type of downlink multi-AP coordinated transmission indicated by the first indication information, wherein
   the processing unit is further configured to generate a beamforming report corresponding to the type of downlink multi-AP coordinated transmission indicated by the first indication information; and
   the transceiver unit is further configured to send the beamforming report to the first access point.

2. The communication apparatus according to claim 1, wherein if the type of downlink multi-AP coordinated transmission indicated by the first indication information is joint transmission JT, the beamforming report is used to feed back channel state information of a combined channel between the plurality of access points and the station.

3. The communication apparatus according to claim 1, wherein if the type of downlink multi-AP coordinated transmission indicated by the first indication information is coordinated beamforming CBT transmission, the beamforming report is used to feed back a plurality of pieces of channel state information of a plurality of channels between the plurality of access points and the station.

4. The communication apparatus according to claim 2 or 3, wherein one piece of channel state information comprises an average signal-to-noise ratio of each space-time stream of a channel on a plurality of subcarriers, and angle values corresponding to a compressed beamforming feedback matrix of the channel corresponding to the plurality of subcarriers.

5. The communication apparatus according to any one of claims 1 to 4, wherein the first indication information is carried in a common information field or a user information field of the announcement frame.

6. The communication apparatus according to any one of claims 1 to 5, wherein the announcement frame further carries second indication information, and the second indication information indicates a manner of sending an NDP frame by an access point participating in multi-AP coordinated transmission.

7. The communication apparatus according to claim 6, wherein the manner of sending an NDP frame by an access point participating in multi-AP coordinated transmission comprises a manner of simultaneous sending and a manner of sequential sending, wherein the manner of simultaneous sending is a manner of sending an NDP frame by an access point participating in multi-AP coordinated transmission at a time interval after the announcement frame is received, and the manner of sequential sending is a manner of sending an NDP frame according to sending time of the NDP frame indicated by the announcement frame.

8. A communication apparatus, used in a first access point, comprising:

   a processing unit, configured to generate an announcement frame; and

a transceiver unit, configured to send the announcement frame, wherein the announcement frame carries first indication information, and the first indication information indicates a type of downlink multi-AP coordinated transmission, wherein
the transceiver unit is further configured to receive, from a station, a beamforming report corresponding to the type of downlink multi-AP coordinated transmission indicated by the first indication information.

9. The communication apparatus according to claim 8, wherein if the type of downlink multi-AP coordinated transmission indicated by the first indication information is joint transmission JT, the beamforming report is used to feed back channel state information of a combined channel between the plurality of access points and the station.

10. The communication apparatus according to claim 8, wherein if the type of downlink multi-AP coordinated transmission indicated by the first indication information is coordinated beamforming CBT transmission, the beamforming report is used to feed back a plurality of pieces of channel state information of a plurality of channels between the plurality of access points and the station.

11. The communication apparatus according to claim 9 or 10, wherein one piece of channel state information comprises an average signal-to-noise ratio of each space-time stream of a channel on a plurality of subcarriers, and angle values corresponding to a compressed beamforming feedback matrix of the channel corresponding to the plurality of subcarriers.

12. The communication apparatus according to any one of claims 8 to 11, wherein the first indication information is carried in a common information field or a user information field of the announcement frame.

13. The communication apparatus according to any one of claims 8 to 12, wherein the announcement frame further carries second indication information, and the second indication information indicates a manner of sending an NDP frame by an access point participating in multi-AP coordinated transmission.

14. The communication apparatus according to claim 13, wherein the manner of sending an NDP frame by an access point participating in multi-AP coordinated transmission comprises a manner of simultaneous sending and a manner of sequential sending, wherein the manner of simultaneous sending is a manner of sending an NDP frame by an access point participating in multi-AP coordinated transmission at a time interval after the announcement frame is received, and the manner of sequential sending is a manner of sending an NDP frame according to sending time of the NDP frame indicated by the announcement frame.

15. A communication apparatus, used in a second access point, comprising:

a transceiver unit, configured to receive an announcement frame from a first access point, wherein the announcement frame carries first indication information, and the first indication information indicates a type of downlink multi-AP coordinated transmission; and
a processing unit, configured to generate an NDP frame, wherein
the transceiver unit is further configured to send the NDP frame to a station, and the NDP frame is for channel measurement to generate a beamforming report corresponding to the type of downlink multi-AP coordinated transmission indicated by the first indication information.

16. The communication apparatus according to claim 15, wherein the first indication information is carried in a common information field or a user information field of the announcement frame.

17. The communication apparatus according to claim 15 or 16, wherein the announcement frame further carries second indication information, and the second indication information indicates a manner of sending an NDP frame by an access point participating in multi-AP coordinated transmission.

18. The communication apparatus according to claim 17, wherein the manner of sending an NDP frame by an access point participating in multi-AP coordinated transmission comprises a manner of simultaneous sending and a manner of sequential sending, wherein the manner of simultaneous sending is a manner of sending an NDP frame by an access point participating in multi-AP coordinated transmission at a time interval after the announcement frame is received, and the manner of sequential sending is a manner of sending an NDP frame according to sending time of the NDP frame indicated by the announcement frame.

19. The communication apparatus according to any one of claims 15 to 18, wherein the announcement frame further carries the second indication information, and the second indication information indicates the manner of sending an NDP frame by an access point participating in multi-AP coordinated transmission; and
the transceiver unit is specifically configured to:

send the NDP frame to the station at a time interval after the announcement frame is received when the manner, indicated by the second indication information, of sending an NDP frame by an access point participating in multi-AP coordinated transmission is the manner of simultaneous sending; or
send the NDP frame to the station at the sending time of the NDP frame indicated by the announcement frame when the manner, indicated by the second indication information, of sending an NDP frame by an access point participating in multi-AP coordinated transmission is the manner of sequential sending.

20. A channel sounding method for multi-access point AP coordinated transmission, comprising:

receiving, by a station, an announcement frame from a first access point, wherein the announcement frame carries first indication information, and the first indication information indicates a type of downlink multi-AP coordinated transmission;
receiving, by the station, null data packet NDP frames from a plurality of access points;
performing, by the station, channel measurement on the NDP frame according to the type of downlink multi-AP coordinated transmission indicated by the first indication information, to generate a beamforming report corresponding to the type of downlink multi-AP coordinated transmission indicated by the first indication information;
sending, by the station, the beamforming report to the first access point, wherein the beamforming report is used to feed back channel state information of the station.

21. A channel sounding method for multi-access point AP coordinated transmission, comprising:

generating, by a first access point, an announcement frame;
sending, by the first access point, the announcement frame, wherein the announcement frame carries first indication information, and the first indication information indicates a type of downlink multi-AP coordinated transmission; and
receiving, by the first access point from a station, a beamforming report corresponding to the type of downlink multi-AP coordinated transmission indicated by the first indication information.

22. A channel sounding method for multi-access point AP coordinated transmission, comprising:

receiving, by a second access point, an announcement frame from a first access point, wherein the announcement frame carries first indication information, and the first indication information indicates a type of downlink multi-AP coordinated transmission;
generating, by the second access point, an NDP frame; and
sending, by the second access point, the NDP frame to a station, wherein the NDP frame is for channel measurement to generate a beamforming report corresponding to the type of downlink multi-AP coordinated transmission indicated by the first indication information.

23. The method according to claim 20 or 21, wherein if the type of downlink multi-AP coordinated transmission indicated by the first indication information is joint transmission JT, the beamforming report is used to feed back channel state information of a combined channel between the plurality of access points and the station.

24. The method according to claim 20 or 21, wherein if the type of downlink multi-AP coordinated transmission indicated by the first indication information is coordinated beamforming CBT transmission, the beamforming report is used to feed back a plurality of pieces of channel state information of a plurality of channels between the plurality of access points and the station.

25. The method according to claim 23 or 24, wherein one piece of channel state information comprises an average signal-to-noise ratio of each space-time stream of a channel on a plurality of subcarriers, and angle values corresponding to a compressed beamforming feedback matrix of the channel corresponding to the plurality of subcarriers.

26. The method according to any one of claims 20 to 25, wherein the first indication information is carried in a common information field or a user information field of the announcement frame.

27. The method according to any one of claims 20 to 26, wherein the announcement frame further carries second indication information, and the second indication information indicates a manner of sending an NDP frame by an access point participating in multi-AP coordinated transmission.

28. The method according to claim 27, wherein the manner of sending an NDP frame by an access point participating in multi-AP coordinated transmission comprises a manner of simultaneous sending and a manner of sequential sending, wherein the manner of simultaneous sending is a manner of sending an NDP frame by an access point participating in multi-AP coordinated transmission at a time interval after the announcement frame is received, and the manner of sequential sending is a manner of sending an NDP frame according to sending time of the NDP frame indicated by the announcement frame.

29. The method according to claim 22, wherein the announcement frame further carries second indication information, and the second indication information indicates a manner of sending an NDP frame by an access point participating in multi-AP coordinated transmission, and

    the sending, by the second access point, the NDP frame to a station comprises:

        sending, by the second access point, the NDP frame to the station at a time interval after the announcement frame is received when the manner, indicated by the second indication information, of sending an NDP frame by an access point participating in multi-AP coordinated transmission is a manner of simultaneous sending; or sending, by the second access point, the NDP frame to the station at sending time of the NDP frame indicated by the announcement frame when the manner, indicated by the second indication information, of sending an NDP frame by an access point participating in multi-AP coordinated transmission is a manner of sequential sending.

30. A communication apparatus, comprising a processor and a transceiver, wherein the transceiver is configured to receive and send signaling or a frame, and the processor is configured to execute instructions, to enable the communication apparatus to perform the method according to any one of claims 20 and 23 to 28.

31. A communication apparatus, comprising a processor and a transceiver, wherein the transceiver is configured to receive and send signaling or a frame, and the processor is configured to execute instructions, to enable the communication apparatus to perform the method according to any one of claims 21 and 23 to 28.

32. A communication apparatus, comprising a processor and a transceiver, wherein the transceiver is configured to receive and send signaling or a frame, and the processor is configured to execute instructions, to enable the communication apparatus to perform the method according to any one of claims 22 and 26 to 29.

33. A chip or a chip system, comprising an input/output interface and a processing circuit, wherein the input/output interface is configured to exchange information or data, and the processing circuit is configured to execute instructions, to enable an apparatus on which the chip or the chip system is installed performs the method according to claims 20 to 29.

34. A chip system, wherein the chip system comprises a processor, configured to support an apparatus on which the chip system is installed in implementing the method according to any one of claims 20 to 29.

35. A computer-readable storage medium, wherein the computer-readable storage medium stores instructions, and when the instructions are executed, the method according to any one of claims 20 to 29 is performed.

36. A computer program product comprising instructions, wherein when the instructions are executed on a computer, the method according to any one of claims 20 to 29 is performed.

37. A wireless communication system, comprising a station, a first access point, and a second access point, wherein

        the station is the communication apparatus according to any one of claims 1 to 7;
        the first access point is the communication apparatus according to any one of claims 8 to 14; and
        the second access point is the communication apparatus according to any one of claims 15 to 19.

AP

| High efficiency null data packet announcement HE NDPA | SIFS: short inter-frame space | Null data packet NDP | SIFS | | SIFS | Beamforming report trigger BRP Trigger | SIFS |

Timeline

STA1

| Beamforming report BF Report | | Beamforming report BF Report |

Timeline

0 to N times

FIG. 1a

FIG. 1b

AP100    AP200    AP100    AP200

STA300

STA300  STA400

2a

2b

FIG. 2

AP1

STA

AP2

FIG. 3a

FIG. 3b

FIG. 3c

First access point

S401: Generate an announcement frame

S402: Send the announcement frame, where the announcement frame carries first indication information, and the first indication information indicates a type of downlink multi-AP coordinated transmission

Generate a null data packet NDP frame

Station

Second access point

S403: Generate a null data packet NDP frame

Second access point

Generate a null data packet NDP frame

S404: Send the NDP frame

Send the NDP frame

Send the NDP frame

TO FIG. 4B

TO FIG. 4B

TO FIG. 4B

TO FIG. 4B

FIG. 4A

S405: Perform channel measurement on the NDP frame according to the type of downlink multi-AP coordinated transmission indicated by the first indication information, to generate a beamforming report corresponding to the type of downlink multi-AP coordinated transmission indicated by the first indication information

S407: Send a trigger frame

S406: Send the beamforming report

Send the beamforming report

Send the beamforming report

FIG. 4B

EP 4 152 799 A1

EP 4 152 799 A1

Optional

| Frame control Frame Control | Duration Duration | RA Receiving address | TA Transmitting address | Sounding Dialog Token Sounding dialog token | Common information Common information | AP information 1 AP information 1 | ... | AP information n AP information n | STA information 1 STA information 1 | ... | STA information n STA information n | FCS Frame check sequence |

Optional: optional

| ... | Feedback mode Feedback mode | ... |

FIG. 5a

Optional

Optional: optional

| Frame control / Frame Control | Duration / Duration | RA / Receiving address | TA / Transmitting address | Sounding Dialog Token / Sounding dialog token | Common information / Common information | AP information 1 / AP information 1 | ... | AP information n / AP information n | STA information 1 / STA information 1 | ... | STA information n / STA information n | FCS / Frame check sequence |

... | Feedback mode / Feedback mode | ...

FIG. 5b

EP 4 152 799 A1

AP1

AP2

$H_{12}$

$H_{11}$

STA1

FIG. 6

| Nc Index Number of columns index | Nr Index Number of rows index | BW Channel bandwidth | Grouping (Ng) Grouping | Codebook Information Codebook information | Feedback Type Feedback type | Remaining Feedback Segment Remaining feedback segment | First Feedback Segment First feedback segment | RU Start Index Resource unit start index | RU End Index Resource unit end index | Sounding Dialog Token Number Sounding dialog token number | Reserved Reserved |
|---|---|---|---|---|---|---|---|---|---|---|---|

FIG. 7

EP 4 152 799 A1

Common field

Per-station field

| Trigger Type Trigger frame type | Length Length | Cascade Indication Cascade indication | CS Required Carrier sense required | BW Bandwidth | GI And LTF Type Guard interval and long training field type | MU MIMO LTF mode (Mode) | Number of HE-LTF Symbols Number of HE-LTF symbols |

| LDPC Extra Symbol Segment | AP transmit power AP TX Power | Data packet extension Packet Extension | Spatial reuse Spatial Reuse | Doppler Doppler | HE-SIG-A Reserved | Reserved Reserved |

| User Info (STA 1) | ... | User Info (STA M) |

| AID12 | Resource unit allocation RU Allocation | Coding type Coding Type | Modulation and coding scheme MCS | Dual-carrier modulation DCM | Spatial stream allocation SS Allocation | Received signal strength indicator Target RSSI | Reserved Reserved | Feedback segment retransmission bitmap Feedback Segment Retransmission Bitmap |

FIG. 8

36

SIFS: short inter-frame space
NDPA: null data packet announcement
NDP: null data packet
BFR: beamforming report
BFRP: beamforming report poll
Sounding phase: sounding phase
Feedback phase: feedback phase

9a

9b

FIG. 9

10a

SIFS: short inter-frame space
NDPA: null data packet announcement
NDP: null data packet
BFR: beamforming report
BFRP: beamforming report poll
Sounding phase: sounding phase
Feedback phase: feedback phase

10b

FIG. 10

Communication apparatus 1000

1001    1005

Processor

CPU0

CPU1

Processor

CPU0

CPU1

1002

1004

Memory

1003

Transceiver

FIG. 11

1101

Communication
apparatus 1100

Processing unit

Transceiver unit

1102

FIG. 12

## INTERNATIONAL SEARCH REPORT

| International application No. |
|---|
| **PCT/CN2021/093164** |

**A.    CLASSIFICATION OF SUBJECT MATTER**

H04W 24/08(2009.01)i

According to International Patent Classification (IPC) or to both national classification and IPC

**B.    FIELDS SEARCHED**

Minimum documentation searched (classification system followed by classification symbols)

H04W; H04L; H04Q

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: 波束, 成型, 成形, 联合, 报告, 协调, 协同, 协作, 测量, beamforming, joint, report+, NDP, coordinat+, measur+, csi

**C.    DOCUMENTS CONSIDERED TO BE RELEVANT**

| Category* | Citation of document, with indication, where appropriate, of the relevant passages | Relevant to claim No. |
|---|---|---|
| X | CN 107733500 A (HUAWEI TECHNOLOGIES CO., LTD.) 23 February 2018 (2018-02-23) description, paragraphs [0002]-[0072] | 1-37 |
| X | CN 103427887 A (SHARP CORPORATION) 04 December 2013 (2013-12-04) description paragraphs 2-60 | 1-37 |
| A | CN 111030742 A (MEDIATEK SINGAPORE PTE. LTD.) 17 April 2020 (2020-04-17) entire document | 1-37 |
| A | WO 2020068385 A1 (QUALCOMM INC.) 02 April 2020 (2020-04-02) entire document | 1-37 |
| A | US 2020112350 A1 (QUALCOMM INC.) 09 April 2020 (2020-04-09) entire document | 1-37 |
| A | MOTOROLA. "Coordinated Beamforming Algorithms Based on Spatial Covariance Feedback and its Gain over Single-point SU/MU Beamforming" *3GPP TSG RAN1#58 R1-093410*, 29 August 2009 (2009-08-29), entire document | 1-37 |

☐ Further documents are listed in the continuation of Box C.          ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **21 June 2021** | **26 July 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/093164**

| Patent document cited in search report | | | Publication date (day/month/year) | Patent family member(s) | | | Publication date (day/month/year) |
|---|---|---|---|---|---|---|---|
| CN | 107733500 | A | 23 February 2018 | US | 2019190630 | A1 | 20 June 2019 |
| | | | | WO | 2018028256 | A1 | 15 February 2018 |
| | | | | EP | 3496292 | A1 | 12 June 2019 |
| CN | 103427887 | A | 04 December 2013 | | None | | |
| CN | 111030742 | A | 17 April 2020 | US | 2020112353 | A1 | 09 April 2020 |
| | | | | TW | 202015361 | A | 16 April 2020 |
| | | | | EP | 3637633 | A2 | 15 April 2020 |
| WO | 2020068385 | A1 | 02 April 2020 | US | 2020076551 | A1 | 05 March 2020 |
| US | 2020112350 | A1 | 09 April 2020 | | None | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010480975